# EUROPEAN PATENT APPLICATION

(11) **EP 4 192 110 A1**
(43) Date of publication of application: **07.06.2023**
(21) Application number: 20947778.5
(22) Date of filing: 30.07.2020
(51) Int. Cl.: H04W 36/30

(54) **CONDITION-BASED SECONDARY NODE OR PRIMARY-SECONDARY CELL CHANGE METHOD AND DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); LI, Haitao, Dongguan, Guangdong 523860 (CN)
(74) Representative: Taor, Simon Edward William
(86) International application number: PCT/CN2020/105976
(87) International publication number: WO 2022/021247

(57) **Abstract**

The embodiments of the present disclosure relate to a condition-based secondary node or primary secondary cell change method. The method includes: receiving configuration information for changing a secondary node/primary secondary cell; and changing the secondary node/primary secondary cell based on the configuration information for changing the secondary node/primary secondary cell. The configuration information for changing the secondary node/primary secondary cell includes at least one of: addition condition configuration information for a candidate secondary node/primary secondary cell; configuration information for the candidate secondary node/primary secondary cell; and release condition configuration information for a source secondary node/primary secondary cell. The embodiments of the present disclosure can implement condition-based addition of a secondary node or change of a primary secondary cell.

## Description

### TECHNICAL FIELD

The present disclosure relates to communication technology, and more particularly, to a condition-based secondary node or primary secondary cell change method and device

### BACKGROUND

Currently, a Secondary Node (SN) change process can be triggered by a Master Node (MN) or an SN. In the R16 mobility enhancement topic, a condition-based handover and a condition-based intra-SN PSCell change have been proposed.

In the condition-based handover, a current cell configures a UE with a triggering condition for handover and a target cell corresponding to the triggering condition and its corresponding configuration information. When the UE's measurement result satisfies the handover triggering condition, the handover to the preconfigured cell is triggered.

In the condition-based handover, a current cell configures a UE with a triggering condition for handover and a target cell corresponding to the triggering condition and its corresponding configuration information. When the UE's measurement result satisfies the handover triggering condition, the handover to the preconfigured cell is triggered.

Currently, there is no condition-based inter-SN PSCell change procedure.

### SUMMARY

The embodiments of the present disclosure provide a condition-based secondary node or primary secondary cell change method and device, enabling condition-based secondary node change or primary secondary cell change.

An embodiment of the present disclosure provides a condition-based secondary node or primary secondary cell change method. The method is applied in a terminal device and includes: receiving configuration information for changing a secondary node/primary secondary cell; and changing the secondary node/primary secondary cell based on the configuration information for changing the secondary node/primary secondary cell. The configuration information for changing the secondary node/primary secondary cell includes at least one of: addition condition configuration information for a candidate secondary node/primary secondary cell; configuration information for the candidate secondary node/primary secondary cell; and release condition configuration information for a source secondary node/primary secondary cell.

An embodiment of the present disclosure further provides a condition-based secondary node or primary secondary cell change method. The method is applied in a master node and includes: transmitting configuration information for changing a secondary node/primary secondary cell to a terminal device. The configuration information for changing the secondary node/primary secondary cell includes at least one of: addition condition configuration information for a candidate secondary node/primary secondary cell; configuration information for the candidate secondary node/primary secondary cell; and release condition configuration information for a source secondary node/primary secondary cell.

An embodiment of the present disclosure provides a condition-based secondary node or primary secondary cell change method. The method is applied in a candidate secondary node and includes: transmitting configuration information for changing a secondary node/primary secondary cell to a master node. The configuration information for changing the secondary node/primary secondary cell includes at least one of: addition condition configuration information for the candidate secondary node/primary secondary cell; and configuration information for the candidate secondary node/primary secondary cell.

An embodiment of the present disclosure provides a condition-based secondary node or primary secondary cell change method. The method is applied in a source secondary node and includes: transmitting configuration information for changing a secondary node/primary secondary cell to a master node. The configuration information for changing the secondary node/primary secondary cell includes at least one of: addition condition configuration information for a candidate secondary node/primary secondary cell; and release condition configuration information for the source secondary node/primary secondary cell.

An embodiment of the present disclosure provides a terminal device. The terminal device includes: a first receiving module configured to receive configuration information for changing a secondary node/primary secondary cell; and a changing module configured to change the secondary node/primary secondary cell based on the configuration information for changing the secondary node/primary secondary cell. The configuration information for changing the secondary node/primary secondary cell includes at least one of: addition condition configuration information for a candidate secondary node/primary secondary cell; configuration information for the candidate secondary node/primary secondary cell; and release condition configuration information for a source secondary node/primary secondary cell.

An embodiment of the present disclosure provides a network device. The network device includes: a second transmitting module configured to transmit configuration information for changing a secondary node/primary secondary cell to a terminal device. The configuration information for changing the secondary node/primary secondary cell includes at least one of: addition condition configuration information for a candidate secondary node/primary secondary cell; configuration information for the candidate secondary node/primary secondary cell; and release condition configuration information for a source secondary node/primary secondary cell.

An embodiment of the present disclosure provides a network device. The network device includes: a third transmitting module configured to transmit configuration information for changing a secondary node/primary secondary cell to a master node. The configuration information for changing the secondary node/primary secondary cell includes at least one of: addition condition configuration information for the candidate secondary node/primary secondary cell; and configuration information for the candidate secondary node/primary secondary cell.

An embodiment of the present disclosure provides a network device. The network device includes: a fourth transmitting module configured to transmit configuration information for changing a secondary node/primary secondary cell to a master node. The configuration information for changing the secondary node/primary secondary cell includes at least one of: addition condition configuration information for a candidate secondary node/primary secondary cell; and release condition configuration information for the source secondary node/primary secondary cell.

The embodiments of the present disclosure can implement condition-based addition of a secondary node or a primary secondary cell, such that the process of adding a secondary node or a primary secondary cell can be completed in a timely and efficient manner, and efficient load distribution can be achieved.

### BRIEF DESCRIPTION OF DRAWINGS

FIG. 1 is a first schematic diagram showing an application scenario of an embodiment of the present disclosure.
FIG. 2 is a second schematic diagram showing an application scenario of an embodiment of the present disclosure.
FIG. 3 is an implementation flowchart illustrating a condition-based SN/PSCell change method 300 according to an embodiment of the present disclosure.
FIG. 4 is an implementation flowchart showing Embodiment 1 of the present disclosure.
FIG. 5 is an implementation flowchart showing Embodiment 2 of the present disclosure.
FIG. 6 is an implementation flowchart showing Embodiment 3 of the present disclosure.
FIG. 7 is an implementation flowchart showing Embodiment 4 of the present disclosure.
FIG. 8 is an implementation flowchart showing Embodiment 5 of the present disclosure.
FIG. 9 is an implementation flowchart illustrating a condition-based SN/PSCell change method 900 according to an embodiment of the present disclosure.
FIG. 10 is an implementation flowchart illustrating a condition-based SN/PSCell change method 1000 according to an embodiment of the present disclosure.
FIG. 11 is an implementation flowchart illustrating a condition-based SN/PSCell change method 1100 according to an embodiment of the present disclosure.
FIG. 12 is a schematic diagram showing a structure of a terminal device 1200 according to an embodiment of the present disclosure.
FIG. 13 is a schematic diagram showing a structure of a terminal device 1300 according to an embodiment of the present disclosure.
FIG. 14 is a schematic diagram showing a structure of a network device 1400 according to an embodiment of the present disclosure.
FIG. 15 is a schematic diagram showing a structure of a network device 1500 according to an embodiment of the present disclosure.
FIG. 16 is a schematic structural diagram of a network device 1600 according to an embodiment of the present disclosure.
FIG. 17 is a schematic diagram showing a structure of a communication device 1700 according to an embodiment of the present disclosure.
FIG. 18 is a schematic diagram showing a structure of a chip 1800 according to an embodiment of the present disclosure.

### DESCRIPTION OF EMBODIMENTS

The technical solutions in the embodiments of the present disclosure will be described below with reference to the drawings in the embodiments of the present disclosure.

It should be noted that the terms "first" and "second" in the description and claims of the embodiments of the present disclosure and the above figures are used to distinguish similar objects from each other, and are not necessarily used to define a specific order or sequence. Moreover, the objects described by "first" and "second" may be the same or different.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Universal Mobile Telecommunication System (UMTS), Wireless Local Area Networks (WLAN), Wireless Fidelity (WiFi), the next 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, etc. The embodiments of the present disclosure can also be applied to these communication systems.

Optionally, the communication system of an embodiment of the present disclosure may also be applied to a Carrier Aggregation (CA) scenario, a Dual Connectivity (DC) scenario, a Standalone (SA) network deployment scenario, and the like.

The embodiment of the present disclosure is not limited to any spectrum it is to be applied to. For example, the embodiment of the present disclosure may be applied to licensed spectrum or unlicensed spectrum.

The embodiments of the present disclosure are described in conjunction with a network device and a terminal device. The terminal device may refer to a User Equipment (LTE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

The network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, or a network device in a future evolved PLMN.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

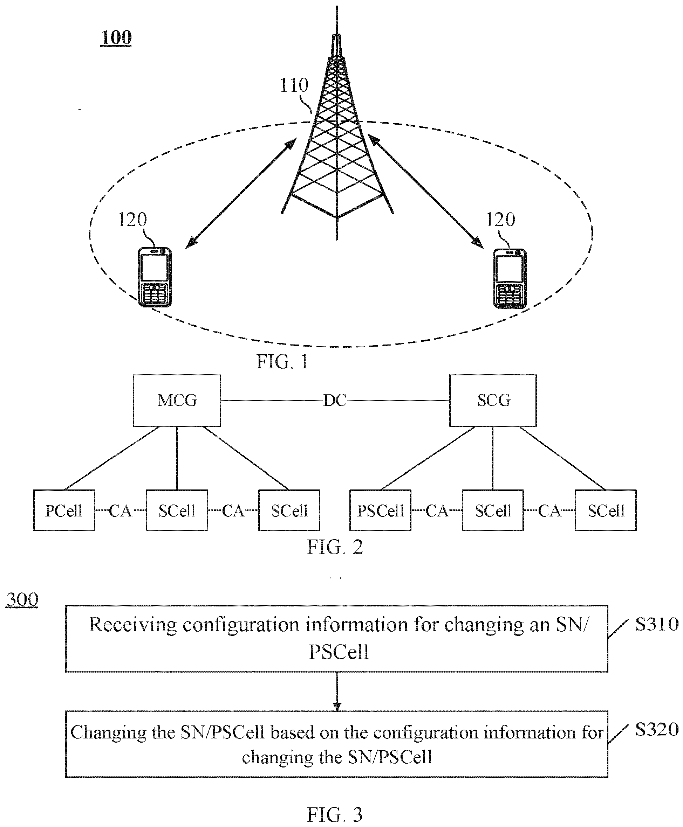

FIG. 1 illustratively shows one network device 1100 and two terminal devices 120. Alternatively, the communication system 100 may include multiple network devices 110, and the coverage of each network device 110 may include other numbers of terminal devices 120. The embodiment of the present disclosure is not limited to this. The embodiment of the present disclosure can be applied to one terminal device 120 and one network device 110, or to one terminal device 120 and another terminal device 120.

Optionally, the communication system 100 may also include other network entities such as Mobility Management Entity (MME) or Access and Mobility Management Function (AMF). The embodiment of the present disclosure is not limited to this.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

An embodiment of the present disclosure provides a condition-based secondary node or primary secondary cell (SN/PSCell) change method, applied in a Dual Connectivity (DC) network including a UE, a Master Cell Group (MCG) and a Secondary Cell Group (SCG). FIG. 2 exemplarily shows one MCG and one SCG. The MCG can be simply understood as the cell group to which the cell where the UE initiates random access for the first time is located belongs. In the MCG, there may be many cells, one of which is used for initiating the initial access, called Primary Cell (PCell). The PCell in the MCG and a Secondary Cell (SCell) in the MCG are combined by means of Carrier aggregation (CA) technology. The UE accesses each cell in the MCG via a Master Node (MN). Similarly, there will also be a most important cell in the SCG, i.e., PSCell, which can also be simply understood as the cell for initiating the initial access in the SCG. The PSCell in the SCG and an SCell in the SCG are also combined by means of the CA technology. The UE accesses each cell in the SCG via a Secondary Node (SN).

FIG. 3 is an implementation flowchart illustrating a condition-based SN/PSCell change method 300 according to an embodiment of the present disclosure. The method can optionally be, but not limited to be, applied in the systems shown in FIG. 1 and FIG. 2. The method can be applied in a UE. The method includes at least some of the following contents.

At S310, configuration information for changing an SN/PSCell is received.

At S320, the SN/PSCell is changed based on the configuration information for changing the SN/PSCell.

Here, the configuration information for changing the secondary node/primary secondary cell includes at least one of:
addition condition configuration information for a candidate secondary node/primary secondary cell;
configuration information for the candidate secondary node/primary secondary cell; and
release condition configuration information for a source secondary node/primary secondary cell.

Optionally, the above addition condition configuration information for the candidate SN/PSCell may include:
addition condition configuration information configured for each individual candidate SN/PSCell; and/or
same addition condition configuration information configured for all candidate SNs/PSCells.

The above addition condition configuration information for the candidate SN/PSCell may be determined by an MN based on a measurement result of a UE, and transmitted by the MN to the UE. Alternatively, the MN may transmit the measurement result of the LTE to each candidate SN, and each candidate SN may determine the addition condition configuration information for the candidate SN/PSCell based on the measurement result of the UE, and transmit it to the UE via the MN.

The above release condition configuration information for the source SN/PSCell may be determined by the MN based on the measurement result of the UE, and transmitted by the MN to the LTE. Alternatively, the MN may transmit the measurement result of the UE to the source SN, and the source SN may determine the release condition configuration information for the source SN/PSCell based on the measurement result of the UE, and transmit it to the UE via the MN.

Optionally, the configuration information for the candidate SN/PSCell may have at least the following two forms.

In the first form, the configuration information for the candidate SN/PSCell may include at least one of:
configuration information for a PSCell in the candidate SN;
configuration information for at least one SCell in the candidate SN; and
addition condition configuration information for at least one SCell in the candidate SN.

In the second form, the configuration information for the candidate SN/PSCell may include at least one of:
configuration information for at least one PSCell in the candidate SN and corresponding PSCell condition configuration information (corresponding PSCell condition);
configuration information for a default PSCell in the candidate SN;
configuration information for at least one SCell in the candidate SN; and
addition condition configuration information for at least one SCell in the candidate SN.

The difference between the above two forms is that in the first form, which cell in the candidate SN is the PSCell has been determined in the configuration information for the candidate SN/PSCell. In the second form, the configuration information for the candidate SN/PSCell provides the condition for each cell in the candidate SN to become the PSCell (such as the above corresponding PSCell condition configuration information), and provides a default PSCell. After receiving the configuration information for the candidate SN/PSCell, the UE determines whether each cell in a target SN it is to be changed to satisfies the condition for becoming the PSCell, and determines the cell that satisfies the condition as the PSCell. If no cell satisfies the condition for becoming the PSCell, the above default PSCell can be selected as the PSCell.

The configuration information for the candidate SN/PSCell may be determined by each candidate SN/PSCell based on the measurement result of the UE, and transmitted to the UE via the MN.

In some embodiments, before the above step S310, the method may further include:
transmitting a measurement result of the terminal device to a master node, the measurement result being used to generate the configuration information for changing the SN/PSCell.

The above configuration information for changing the SN/PSCell may further include at least one of:
an SCG counter; and
an identity (ID) of at least one candidate SN/PSCell.

In some embodiments, the above addition condition configuration information for the candidate SN/PSCell may have at least the following situations:
when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate SN/PSCell is based on Event B 1;
when the original configuration before the changing is NE-DC, and the target configuration after the changing is NR-DC, the addition condition configuration information for the candidate SN/PSCell is based on Event A4;
when the original configuration before the changing is NR-DC, and the target configuration after the changing is NR-DC, the addition condition configuration information for the candidate SN/PSCell is based on Event A4; and
when the original configuration before the changing is NR-DC, and the target configuration after the changing is NE-DC, the addition condition configuration information for the candidate SN/PSCell is based on Event B 1.

In some embodiments, the above addition condition configuration information for the candidate SN/PSCell may depend on the entity configuring the condition, for example:
when the addition condition configuration information for the candidate SN/PSCell is configured by the candidate SN/PSCell, the addition condition configuration information for the candidate SN/PSCell is based on Events A3 and B5.

In some embodiments, the above release condition configuration information for the source SN/PSCell may have at least the following situations:
when an original configuration before the changing is NGEN-DC, EN-DC, NE-DC, or NR-DC, the release condition configuration information for the source SN/PSCell is determined based on a measurement result of a serving cell.

In some embodiments, the above configuration information for changing the SN/PSCell may include at least the following situations:
when the original configuration before the changing is NE-DC, and the target configuration after the changing is NR-DC, the configuration information for changing the SN/PSCell is based on Event B1;
when the original configuration before the changing is NR-DC, and the target configuration after the changing is NR-DC, the configuration information for changing the SN/PSCell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the SN/PSCell is based on Event B1.

The meaning of each of the above events is as follows:
Event A1 indicates that a measurement value (such as Reference Signal Receiving Power (RSRP) or Reference Signal Receiving Quality (RSRQ)) of a serving cell is greater than a threshold.
Event A2 indicates that a measurement value (such as RSRP or RSRQ) of a serving cell is smaller than a threshold.
Event A3 indicates that a measurement value of a neighboring cell is better than a measurement value of a serving cell by a certain threshold.
Event A4 indicates that a measurement value of a neighboring cell is greater than a threshold.
Event A5 indicates that a measurement value of a serving cell is smaller than Threshold 1, and a channel quality of a neighboring cell is greater than Threshold 2.
Event A6 indicates that a signal quality of a neighboring cell is better than that of an Scell by a certain threshold.
Event B1 indicates that a channel quality of an inter-RAT neighboring cell is greater than a threshold.
Event B2 indicates that a channel quality of a serving cell is smaller than Threshold 1, and a channel quality of an inter-RAT neighboring cell is greater than Threshold 2.

Optionally, the above step S320 may include:
initiating a random access procedure towards the candidate SN/PSCell corresponding to the addition condition configuration information for the candidate SN/PSCell when a current condition satisfies the addition condition configuration information for the candidate SN/PSCell, and satisfies the release condition configuration information for the source SN/PSCell;
initiating a random access procedure towards the candidate SN/PSCell corresponding to the addition condition configuration information for the candidate SN/PSCell when a current condition satisfies the addition condition configuration information for the candidate SN/PSCell, and but does not satisfy the release condition configuration information for the source SN/PSCell; or
determining whether to initiate a random access procedure towards the candidate SN/PSCell corresponding to the addition condition configuration information for the candidate SN/PSCell according to a predetermined processing scheme when a current condition satisfies the addition condition configuration information for the candidate SN/PSCell, and but does not satisfy the release condition configuration information for the source SN/PSCell.

Specifically, the UE may initiate a random access procedure towards a target SN/PSCell (that is, the candidate SN/PSCell it determines to be changed to), the target SN notifies the MN to trigger data forwarding, activate a GRPS Tunneling Protocol (GTP) tunnel, and/or establish a GTP tunnel. The data forwarding may include the source SN forwarding data to the MN, the MN forwarding the data to the target SN, and/or the UPF transmitting the data to the target SN. The activation of the GTP tunnel may include activation of the GTP tunnel from the source SN to the MN, activation of the GTP tunnel from the MN to the target SN, and/or activation of the GTP tunnel from the UPF to the target SN. The establishment of the GTP tunnel may include establishment of the GTP tunnel from the source SN to the MN, the GTP tunnel from the MN to the target SN, and/or the GTP tunnel from the UPF to the target SN. The tunnel establishment, activation and data forwarding processes will be described in detail in the following embodiments.

The above describes a condition-based SN/PSCell change method applied in a UE provided by an embodiment of the present disclosure. The UE performs condition-based SN change or PSCell change according to the received configuration information for changing the SN/PSCell. The configuration information for changing the SN/PSCell is calculated by the MN or the SN based on the measurement result reported by the UE, and the calculation result is transmitted to the LTE. Specific embodiments will be given below to explain the interactions between the entities.

### Embodiment 1

In this embodiment, a condition-based SN/PSCell change process is initiated by the MN. The addition condition configuration information for the candidate SN/PSCell and/or the release condition configuration information for the source secondary node/primary secondary cell are generated by the MN. The SN gives the above configuration information for the candidate SN/PSCell according to the addition condition configuration information for the candidate SN/PSCell information. Then, the MN transmits the addition condition configuration information for the candidate SN/PSCell, the release condition configuration information for the source secondary node/primary secondary cell, and/or the configuration information for the candidate SN/PSCell to the UE.

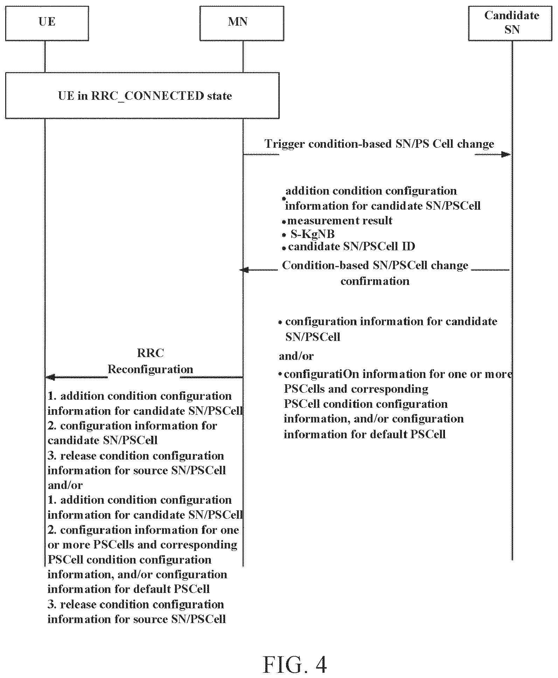

FIG. 4 is an implementation flowchart of Embodiment 1 of the present disclosure. As shown in FIG. 4, it includes the following steps.

Step 1: MR-DC is configured between the UE, the MN and the source SN. The UE reports a measurement result of the UE to the MN.

Step 2: The MN determines a suitable set of candidate SNs/PSCells based on the measurement result of the LTE, and generates addition condition configuration information for candidate SN/PSCell. Here, the addition condition configuration information for the candidate SN/PSCell is provided for each individual candidate SN/PSCell, or is common to all candidate SNs/PSCells.

Step 3: The MB forwards the measurement result reported by the UE to each candidate SN/PSCell, and/or transmits the addition condition configuration information for the candidate SN/PSCell as generated in Step 2.

Optionally, the MN may further transmit a condition addition indication to each candidate SN/PSCell, the indication notifying the candidate SN/PSCell to generate the configuration information for the candidate SN/PSCell based on the measurement result of the UE.

Optionally, gNB1 may transmit an identity (ID) of at least one candidate SN/PSCell, an S-KgNB, and/or an SCell list in the SN to each candidate SN/PSCell. Here, the S-KgNB is a key of the SN/PSCell.

Step 4: The MN forwards the measurement result of the UE, a condition release indication for the source SN and/or the release condition configuration information for the source SN to the source SN. This step is optional, and is used to notify the source SN that a condition-based SN/PSCell change is about to occur.

Step 5: The candidate SN/PSCell transmits the SN/PSCell configuration information in the candidate SN to the MN, or transmits the configuration information for one or more PSCells and the corresponding PSCell condition configuration information, and/or the configuration information for a default PSCell to gNB1. The corresponding PSCell condition configuration information may refer to a condition for each cell in the SN to become a PSCell. The default PSCell may refer to a default PSCell in the SN.

Step 6: The MN transmits the condition configuration information for the candidate SN/PSCell and the corresponding configuration information for the candidate SN/PSCell to the UE, or the MN transmits the condition configuration information for the candidate SN/PSCell, the configuration information for one or more PSCells and the corresponding PSCell condition configuration information, and/or the configuration information for the default PSCell to the UE.

Further, the MN may also transmit an SCG counter and/or an identity (ID) of the candidate SN/PSCell to the UE.

Further, the MN may also transmit the release condition configuration information for the source SN/PSCell to the UE.

Step 7: When the UE performs measurement, it evaluates whether each candidate SN/PSCell satisfies the addition condition configuration information for the candidate SN/PSCell and/or the configuration information for the candidate SN/PSCell. If so, the UE initiates a random access procedure towards the candidate SN/PSCell that satisfies the condition (i.e., the target SN/PSCell).

Alternatively, when the UE performs measurement, it evaluates whether each candidate SN/PSCell satisfies the addition condition configuration information for the candidate SN/PSCell and/or the configuration information for the candidate SN/PSCell, and whether the source SN/PSCell satisfies the release condition configuration information for the source SN/PSCell. If both the addition condition configuration information and the release condition configuration information are satisfied, the UE initiates a random access procedure towards the candidate SN/PSCell that satisfies the condition (i.e., the target SN/PSCell). If the addition condition configuration information is satisfied, but the release condition configuration information is not satisfied, the UE can initiate a random access procedure towards the candidate SN/PSCell that satisfies the condition (i.e., the target SN/PSCell), or determine whether to initiate a random access procedure towards the candidate SN/PSCell that satisfies the condition (i.e., the target SN/PSCell) according to its own settings.

Optionally, if gNB1 transmits the configuration information for the PSCell in the candidate SN to the UE in the above Step 6, that is, if gNB 1 has configured the PSCell in the candidate SN for the UE, then in this step, the UE can initiate a random access procedure towards the PSCell.

Alternatively, if the MN transmits the configuration information for one or more PSCells and the corresponding PSCell condition configuration information to the UE in the above Step 6, that is, the MN has notified the UE of the condition for each cell in the candidate SN to become the PSCell, then in this step, the UE can determine which cell in the candidate SN that satisfies the condition (i.e., the target SN) satisfies the PSCell condition configuration information, and uses the cell that satisfies the PSCell condition configuration information as the PSCell, so as to initiate a random access procedure towards the PSCell. If no cell satisfies the corresponding PSCell condition configuration information currently, the UE initiates a random access procedure towards the default PSCell.

### Embodiment 2

In this embodiment, a condition-based SN/PSCell change process is initiated by the MN. The addition condition configuration information for the candidate SN/PSCell is determined by the candidate SN/PSCell, and the configuration information for the candidate SN/PSCell is given at the same time, and transmitted to the UE via the MN. The source SN/PSCell determines the addition condition configuration information for the source SN/PSCell, and transmits it to the UE via the MN.

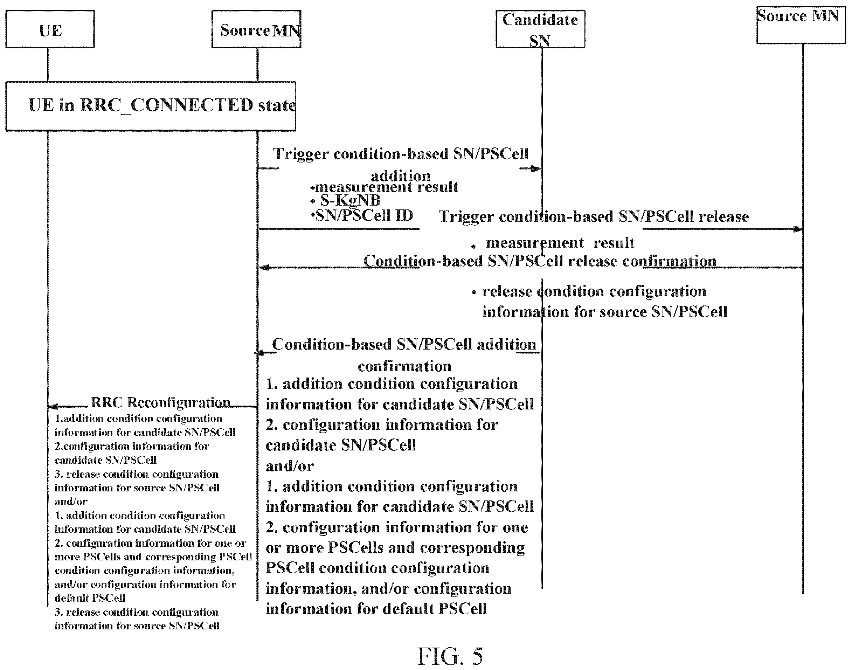

FIG. 5 is an implementation flowchart of Embodiment 2 of the present disclosure. As shown in FIG. 5, it includes the following steps.

Step 1: MR-DC is configured between the UE, the MN and the source SN. The UE reports a measurement result of the UE to the MN.

Step 2: The MN determines a suitable set of candidate SNs/PSCells based on the measurement result. The MN forwards the measurement result reported by the UE to each candidate SN/PSCell. Optionally, the MN may further transmit a configuration information indication to each candidate SN/PSCell, the indication notifying the candidate SN/PSCell to generate the addition condition configuration information for the candidate SN/PSCell and/or the configuration information for the candidate SN/PSCell based on the measurement result of the UE.

Step 3: The candidate SN/PSCell generates the addition condition configuration information for the candidate SN/PSCell and/or the configuration information for the candidate SN/PSCell, and transmit the information to MN.

Optionally, the candidate SN/PSCell may transmit at least one of the following to the MN:
the addition condition configuration information for the candidate SN/PSCell; and
the configuration information for the SN/PSCell in the candidate SN.

Alternatively, the candidate SN/PSCell may transmit at least one of the following to gNB1:
the addition condition configuration information for the candidate SN/PSCell; and
the configuration information for one or more PSCells and the corresponding PSCell condition configuration information, and/or the configuration information for a default PSCell, the corresponding PSCell condition configuration information referring to a condition for each cell in the SN to become a PSCell, the default PSCell referring to a default PSCell in the SN.

Step 4: After receiving the information transmitted by the candidate SN/PSCell, the MN transmits an S-KgNB to the candidate SN/PSCell. Alternatively, the MN may transmit the S-KgNB to the candidate SN/PSCell when forwarding the measurement result of the UE or transmitting the configuration information indication (as in the above Step 2).

Step 5: The MN forwards the measurement result of the UE to the source SN, and/or transmits the condition release indication for the source SN to the source SN.

Step 6: The source SN generates the release condition configuration information for the source SN and transmits it to the MN.

Step 7: The MN transmits the addition condition configuration information for the candidate SN/PSCell and the configuration information for the corresponding SN/PSCell to the UE, or the MN transmits the addition condition configuration information for the candidate SN/PSCell, the configuration information for one or more PSCells and the corresponding PSCell condition configuration information, and/or the configuration information for the default PSCell to the UE. The corresponding PSCell condition configuration information may refer to the condition for each Cell in the SN to become a PSCell. The default PSCell may refer to a default PSCell in the SN.

Further, the MN may transmit the release condition configuration information for the source SN to the UE.

Further, the MN may also transmit an SCG counter, and/or an identity (ID) of the candidate SN/PSCell, and/or an SCell list and its configuration to the UE.

Step 8: When the UE performs the measurement, it evaluates whether each candidate SN/PSCell satisfies the addition condition configuration information for the candidate SN/PSCell and/or the configuration information for the candidate SN/PSCell. If so, the UE initiates a random access procedure towards the candidate SN/PSCell that satisfies the condition (i.e., the target SN/PSCell).

Alternatively, when the UE performs measurement, it evaluates whether each candidate SN/PSCell satisfies the addition condition configuration information for the candidate SN/PSCell and/or the configuration information for the candidate SN/PSCell, and whether the source SN/PSCell satisfies the release condition configuration for the source SN/PSCell information. If both the addition condition configuration information and the release condition configuration information are satisfied, the UE initiates a random access procedure towards the candidate SN/PSCell that satisfies the condition (i.e., the target SN/PSCell). If the addition condition configuration information is satisfied, but the release condition configuration information is not satisfied, the UE can initiate a random access procedure towards the candidate SN/PSCell that satisfies the condition (i.e., the target SN/PSCell), or determine whether to initiate a random access procedure towards the candidate SN/PSCell that satisfies the condition (i.e., the target SN/PSCell) according to its own settings.

Optionally, if the MN transmits the configuration information for the PSCell in the candidate SN to the UE in the above Step 7, that is, the MN has configured the PSCell in the candidate SN for the UE, then in this step, the UE can initiate a random access procedure towards the PSCell.

Alternatively, if the MN transmits the configuration information for one or more PSCells and the corresponding PSCell condition configuration information to the UE in the above Step 7, that is, the MN has notified the UE of the condition for each cell in the candidate SN to become the PSCell, then in this step, the UE can determine which cell in the candidate SN that satisfies the condition (i.e., the target SN) satisfies the PSCell condition configuration information, and uses the cell that satisfies the PSCell condition configuration information as the PSCell, so as to initiate a random access procedure towards the PSCell. If no cell satisfies the corresponding PSCell condition configuration information currently, the UE initiates a random access procedure towards the default PSCell.

### Embodiment 3

In this embodiment, a condition-based SN/PSCell change process is initiated by the source SN. The source SN/PSCell generates the configuration information for changing the SN/PSCell, e.g., including the addition condition configuration information for the candidate SN/PSCell and/or the release condition configuration information for the source SN/PSCell, and transmits the information to the UE via the MN. The candidate SN/PSCell generates the configuration information for the candidate SN/PSCell and transmits it to the UE via the MN.

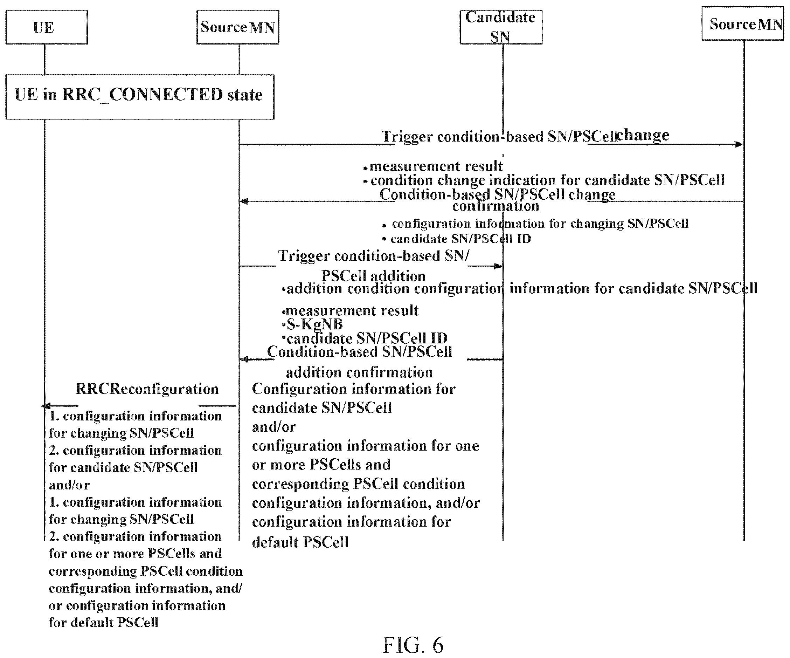

FIG. 6 is an implementation flowchart of Embodiment 3 of the present disclosure. As shown in FIG. 6, it includes the following steps.

Step 1: MR-DC is configured between the UE, the MN and the source SN. The UE reports a measurement result of the UE to the MN.

Step 2: The MN transmits the measurement result reported by the UE and/or the SN/PSCell condition change indication to the source SN.

Step 3: The source SN generates one or more instances of configuration information for changing the SN/PSCell and the identity information of the candidate SN/PSCell node based on the measurement result of the UE, and transmits the information to the MN. The configuration information for changing the SN/PSCell may include the addition condition configuration information for the candidate SN/PSCell and/or the release condition configuration information for the source SN/PSCell.

Step 4: The MN initiates a condition-based SN/PSCell change process towards each candidate SN/PSCell, and notifies each candidate SN/PSCell of at least one of: the configuration information for changing the SN/PSCell, the measurement result of the UE, an S-KgNB of the candidate SN/PSCell, the identity (ID) of the candidate SN/PSCell, etc.

Step 5: The candidate SN/PSCell generates the configuration information for the candidate SN/PSCell, and transmits it to the MN.

Optionally, the candidate SN/PSCell may transmit the configuration information for the SN/PSCell in the candidate SN to the MN.

Alternatively, the candidate SN/PSCell may transmit the configuration information for one or more candidate PSCells and the corresponding PSCell condition configuration information, and/or the configuration information for a default PSCell to gNB1. The corresponding PSCell condition configuration information may refer to a condition for each cell in the candidate SN to become a PSCell. The default PSCell may refer to a default PSCell in the candidate SN.

Step 6: The MN transmits the addition condition configuration information for the candidate SN/PSCell and the corresponding configuration information for the SN/PSCell to the UE, or the MN transmits the addition condition configuration information for the candidate SN/PSCell, the configuration information for one or more PSCells and the corresponding PSCell condition configuration information, and/or the configuration information for the default PSCell to the UE. The corresponding PSCell condition configuration information may refer to a condition for each cell in the SN to become a PSCell. The default PSCell may refer to a default PSCell in the SN.

Further, the MN may transmit the release condition configuration information for the source SN to the UE.

Further, the MN may also transmit an SCG counter, and/or the identity (ID) of the candidate SN/PSCell, and/or an SCell list and its configuration to the UE.

Step 7: When the UE performs measurement, it evaluates whether each candidate SN/PSCell satisfies the addition condition configuration information for the candidate SN/PSCell and/or the configuration information for the candidate SN/PSCell. If so, the UE initiates a random access procedure towards the candidate SN/PSCell that satisfies the condition (i.e., the target SN/PSCell).

Alternatively, when the UE performs measurement, it evaluates whether each candidate SN/PSCell satisfies the addition condition configuration information for the candidate SN/PSCell and/or the configuration information for the candidate SN/PSCell, and whether the source SN/PSCell satisfies the release condition configuration information for the source SN/PSCell. If both the addition condition configuration information and the release condition configuration information are satisfied, the UE initiates a random access procedure towards the candidate SN/PSCell that satisfies the condition (i.e., the target SN/PSCell). If the addition condition configuration information is satisfied, but the release condition configuration information is not satisfied, the UE can initiate a random access procedure towards the candidate SN/PSCell that satisfies the condition (i.e., the target SN/PSCell), or determine whether to initiate a random access procedure towards the candidate SN/PSCell that satisfies the condition (i.e., the target SN/PSCell) according to its own settings.

Optionally, if the MN transmits the configuration information for the PSCell in the candidate SN to the UE in the above Step 6, that is, if the MN has configured the PSCell in the candidate SN for the UE, then in this step, the UE can initiate a random access procedure towards the PSCell.

Alternatively, if the MN transmits the configuration information for one or more PSCells and the corresponding PSCell condition configuration information to the UE in the above Step 6, that is, the MN has notified the UE of the condition for each cell in the candidate SN to become the PSCell, then in this step, the UE can determine which cell in the candidate SN that satisfies the condition (i.e., the target SN) satisfies the PSCell condition configuration information, and uses the cell that satisfies the PSCell condition configuration information as the PSCell, so as to initiate a random access procedure towards the PSCell. If no cell satisfies the corresponding PSCell condition configuration information currently, the UE initiates a random access procedure towards the default PSCell.

Three embodiments of the condition-based SN change or PSCell change method have been described above. Here, in the first and second embodiments, the MN initiates the SN/PSCell change, and in the third embodiment, the SN initiates the SN/PSCell change. The configuration information for changing the SN/PSCell may be determined by the MN and/or the SN. The condition-based PSCell change or SN change according to the embodiments of the present disclosure can reduce air interface signaling, add the PSCell or SN quickly and timely, and achieve fast load offloading.

Based on the above three embodiments, the UE initiates the random access procedure towards the target PSCell. After that, the target SN notifies the MN to trigger data forwarding and/or activate a GTP tunnel, and/or establish a GTP tunnel. The data forwarding may include the source SN forwarding data to the MN, the MN forwarding the data to the target SN, and/or the UPF transmitting the data to the target SN. The GTP tunnel activation may include activation of a GTP tunnel from the source SN to the MN, activation of a GTP tunnel from the MN to the target SN, and/or activation of a GTP tunnel from the UPF to the target SN. The GTP tunnel establishment may include establishment of a GTP tunnel from the source SN to the MN, a GTP tunnel from the MN to the target SN, and/or a GTP tunnel from the UPF to the target SN.

### Embodiment 4

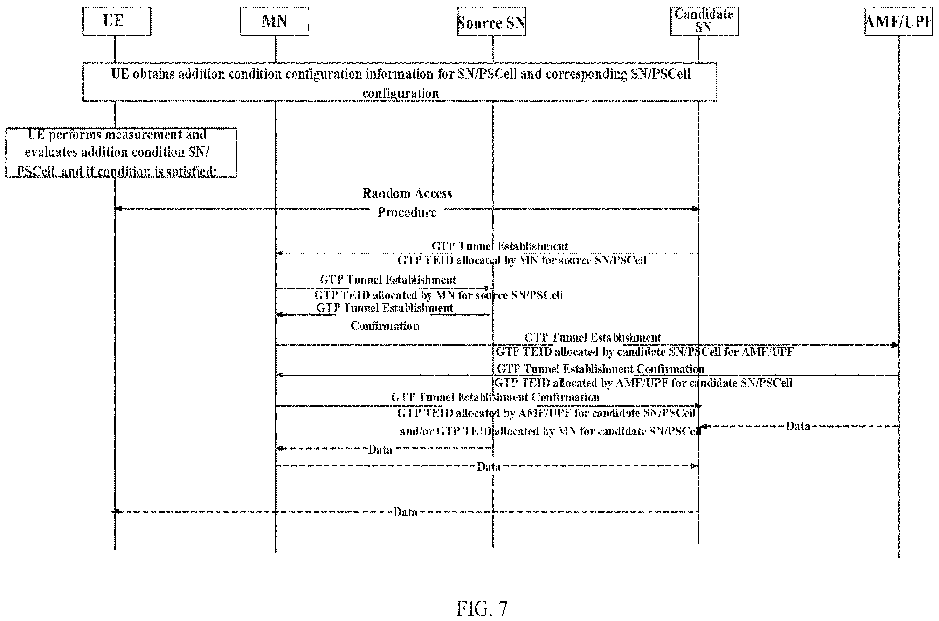

This embodiment introduces the GTP tunnel establishment process. FIG. 7 is an implementation flowchart of Embodiment 4 of the present disclosure. As shown in FIG. 7, it includes the following steps.

Step 1: The UE obtains the addition condition configuration information for each candidate SN/PSCell and the configuration information for each candidate SN/PSCell. Further, the UE may also obtain the release condition configuration information for the source SN/PSCell.

Step 2: The UE performs measurement and evaluates the addition condition for each SN/PSCell. If the addition condition for a candidate SN/PSCell is satisfied, a random access procedure is initiated towards the SN/PSCell. Further, the UE may also evaluate the release condition for the source SN/PSCell, and initiate a random access procedure to the candidate SN/PSCell when the release condition for the source SN/PSCell is also satisfied.

Step 3: The candidate SN/PSCell accessed by the UE (i.e., the target SN/PSCell) transmits a GTP tunnel establishment request to the MN, and the request carries a GTP TEID allocated by the candidate SN/PSCell for the MN and/or a GTP TEID allocated by the candidate SN/PSCell for the AMF/UPF.

Step 4: The MN transmits a GTP tunnel establishment request to the source SN/PSCell, and the request carries a GTP TEID allocated by the MN for the source SN/PSCell.

Step 5: The source SN/PSCell transmits a GTP tunnel establishment confirmation message to the MN.

Step 6: The MN transmits a GTP tunnel establishment request to the AMF/UPF, and the request carries a GTP TEID allocated by the candidate SN/PSCell for the AMF/UPF.

Step 7: The AMF/UPF transmits a GTP tunnel establishment confirmation message to the MN, and the message carries a GTP TEID allocated by the AMF/UPF for the candidate SN/PSCell.

Step 8: The MN transmits a GTP tunnel establishment confirmation message to the candidate SN/PSCell, and the message carries the GTP TEID allocated by the AMF/UPF for the candidate SN/PSCell and/or a GTP TEID allocated by the MN for the candidate SN/PSCell.

With the above Steps 3 to 8, the GTP tunnel between the MN and the source SN/PSCell, the GTP tunnel between the MN and the candidate SN/PSCell, and the GTP tunnel between the AMF/UPF and the candidate SN/PSCell are established. After that, the source SN/PSCell can use the GTP tunnel with the MN to transmit data to the MN, the MN can use the GTP tunnel with the candidate SN/PSCell to forward the data to the candidate SN/PSCell, and the AMF/UPF can use the GTP tunnel with the candidate SN/PSCell to forward the data to the candidate SN/PSCell.

### Embodiment 5

This embodiment introduces the GTP tunnel activation process. In this embodiment, the GTP tunnel between the MN and the source SN/PSCell, the GTP tunnel between the MN and the candidate SN/PSCell, and the GTP tunnel between the AMF/UPF and the candidate SN/PSCell have been established in advance before the SN condition configuration process.

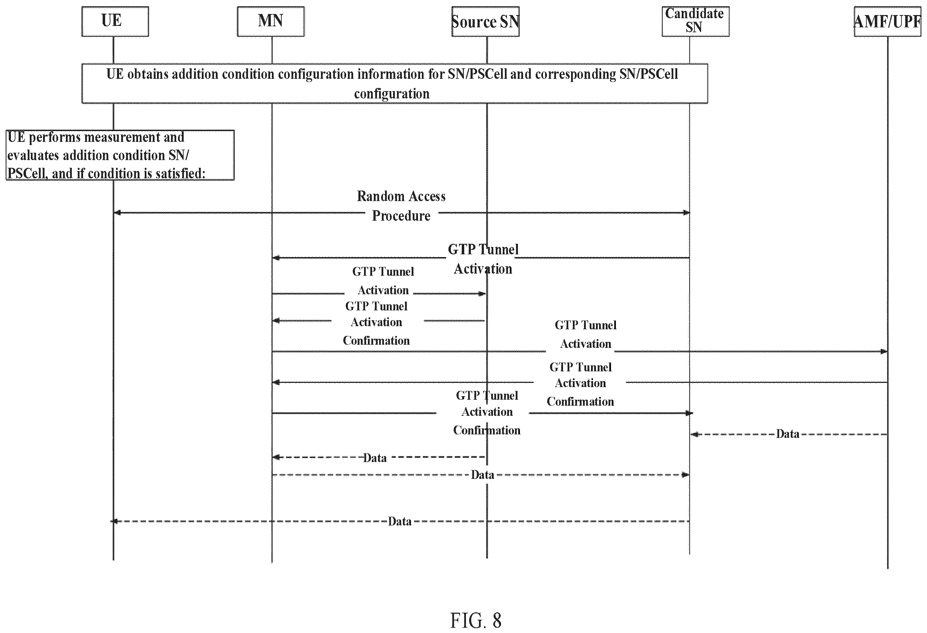

FIG. 8 is an implementation flowchart of Embodiment 5 of the present disclosure. As shown in FIG. 8, it includes the following steps.

Step 1: The UE obtains the addition condition configuration information for each candidate SN/PSCell and the configuration information for each candidate SN/PSCell. Further, the UE may also obtain the release condition configuration information for the source SN/PSCell.

Step 2: The UE performs measurement and evaluates the addition condition for each SN/PSCell. If the addition condition for a candidate SN/PSCell is satisfied, a random access procedure is initiated towards the SN/PSCell. Further, the UE may also evaluate the release condition for the source SN/PSCell, and initiate a random access procedure to the candidate SN/PSCell when the release condition for the source SN/PSCell is also satisfied.

Step 3: The candidate SN/PSCell accessed by the UE (i.e., the target SN/PSCell) transmits a GTP tunnel activation request to the MN.

Step 4: The MN transmits a GTP tunnel activation request to the source SN/PSCell.

Step 5: The source SN/PSCell transmits a GTP tunnel activation confirmation message to the MN.

Step 6: The MN transmits a GTP tunnel activation request to the AMF/UPF.

Step 7: The AMF/UPF transmits a GTP tunnel activation confirmation message to the MN.

Step 8: The MN transmits a GTP tunnel activation confirmation message to the candidate SN/PSCell.

With the above Steps 3 to 6, the GTP tunnel between the MN and the source SN/PSCell, the GTP tunnel between the MN and the candidate SN/PSCell, and the GTP tunnel between the AMF/UPF and the candidate SN/PSCell that have been established in advance are activated. After that, the source SN/PSCell can use the GTP tunnel with the MN to transmit data to the MN, the MN can use the GTP tunnel with the candidate SN/PSCell to forward the data to the candidate SN/PSCell, and the AMF/UPF can use the GTP tunnel with the candidate SN/PSCell to forward the data to the candidate SN/PSCell.

In this embodiment, the GTP tunnels have already been established in the SN condition configuration process, and the data forwarding starts only when the UE triggers the activation of the GTP tunnels after random access. The establishment of the GTP tunnels in Embodiment 4 above is triggered after the random access of the UE, and there is little difference between the two. Only in terms of time delay, the method according to this embodiment has a slight gain.

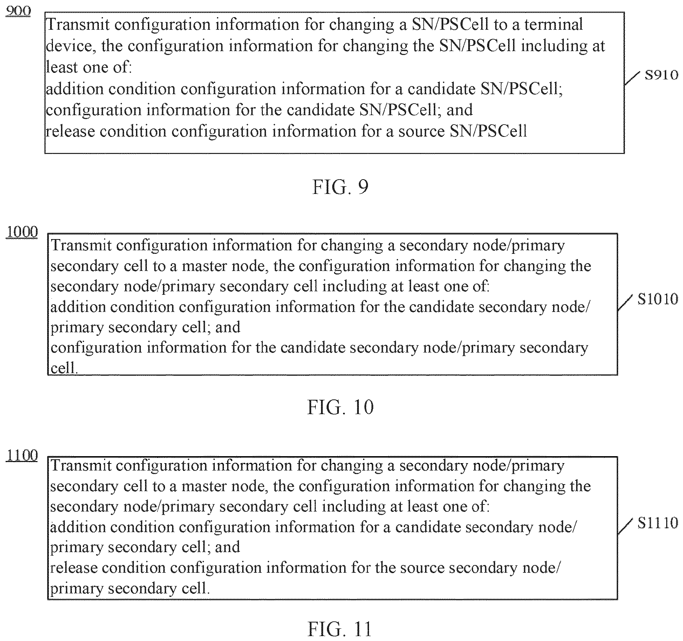

An embodiment also provides a condition-based secondary node or primary secondary cell change method, which can be applied in a master node. FIG. 9 is an implementation flowchart of a condition-based SN/PSCell change method 900 according to an embodiment of the present disclosure, including the following steps.

At S910, configuration information for changing a secondary node/primary secondary cell is transmitted to a terminal device. Here, the configuration information for changing the secondary node/primary secondary cell includes at least one of:
addition condition configuration information for a candidate secondary node/primary secondary cell;
configuration information for the candidate secondary node/primary secondary cell; and
release condition configuration information for a source secondary node/primary secondary cell.

Optionally, the addition condition configuration information for the candidate SN/PSCell may include:
addition condition configuration information configured for each individual candidate secondary node/primary secondary cell; and/or
same addition condition configuration information configured for all candidate secondary nodes/primary secondary cells.

The above addition condition configuration information for the candidate SN/PSCell may be determined by an MN based on a measurement result of a LTE, and transmitted by the MN to the UE. Alternatively, the MN may transmit the measurement result of the LTE to each candidate SN, and each candidate SN may determine the addition condition configuration information for the candidate SN/PSCell based on the measurement result of the UE, and transmit it to the UE via the MN.

The above release condition configuration information for the source SN/PSCell may be determined by the MN based on the measurement result of the UE, and transmitted by the MN to the UE. Alternatively, the MN may transmit the measurement result of the UE to the source SN, and the source SN may determine the release condition configuration information for the source SN/PSCell based on the measurement result of the UE, and transmit it to the UE via the MN.

Optionally, the configuration information for the candidate SN/PSCell may have at least the following two forms.

In the first form, the configuration information for the candidate SN/PSCell may include at least one of:
configuration information for a PSCell in the candidate SN;
configuration information for at least one SCell in the candidate SN; and
addition condition configuration information for at least one SCell in the candidate SN.

In the second form, the configuration information for the candidate SN/PSCell may include at least one of:
configuration information for at least one PSCell in the candidate SN and corresponding PSCell condition configuration information (corresponding PSCell condition);
configuration information for a default PSCell in the candidate SN;
configuration information for at least one SCell in the candidate SN; and
addition condition configuration information for at least one SCell in the candidate SN.

The difference between the above two forms is that in the first form, which cell in the candidate SN is the PSCell has been determined in the configuration information for the candidate SN/PSCell. In the second form, the configuration information for the candidate SN/PSCell provides the condition for each cell in the candidate SN to become the PSCell (such as the above corresponding PSCell condition configuration information), and provides a default PSCell. After receiving the configuration information for the candidate SN/PSCell, the LTE determines whether each cell in a target SN it is to be changed to satisfies the condition for becoming the PSCell, and determines the cell that satisfies the condition as the PSCell. If no cell satisfies the condition for becoming the PSCell, the above default PSCell can be selected as the PSCell.

The configuration information for changing the SN/PSCell may further include at least one of:
an SCG counter; and
an identity (ID) of at least one candidate SN/PSCell.

In some embodiments, before the above step S910, the method may further include:
receiving a measurement result of the terminal device, the measurement result being used to generate the configuration information for changing the secondary node/primary secondary cell.

Corresponding to the above Embodiment 1, the master node may transmit the addition condition configuration information for the SN/PSCell and the measurement result of the UE to the candidate SN/PSCell, and the candidate SN/PSCell may generate the configuration information for the candidate SN/PSCell.

Optionally, the above method may further include:
determining at least one candidate secondary node/primary secondary cell and generating the addition condition configuration information for the candidate secondary node/primary secondary cell and/or the release conditional configuration information for the source secondary node/primary secondary cell, based on a measurement result of the terminal device; and
transmitting, to the at least one candidate secondary node/primary secondary cell, at least one of:
the addition condition configuration information for the candidate secondary node/primary secondary cell;
the measurement result of terminal device;
a condition addition indication for the candidate secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
configuration information for at least one secondary cell in the secondary node.

Further, the above method may further include:
receiving the configuration information for the candidate secondary node/primary secondary cell transmitted by the at least one candidate secondary node/primary secondary cell.

In some embodiments, the method may further include:
transmitting, to the source secondary node/primary secondary cell, at least one of:
the release condition configuration information for the source secondary node/primary secondary cell;
the measurement result of the terminal device; and
a condition release indication for the source secondary node/primary secondary cell.

Corresponding to the above Embodiment 2, the master node may transmit the measurement result of the UE to the candidate N/PSCell, and the candidate SN/PSCell may generate the addition condition configuration information for the candidate SN/PSCell and the configuration information for the SN/PSCell. In addition, the master node may also transmit the measurement result of the UE to the source SN/PSCell, and the source SN/PSCell may generate the release condition configuration information for the source SN/PSCell.

Optionally, the above method may further include:
determining at least one candidate secondary node/primary secondary cell based on a measurement result of the terminal device; and
transmitting, to the at least one candidate secondary node/primary secondary cell, at least one of:
   the measurement result of the terminal device; and
   configuration information indication that notifies the candidate secondary node/primary secondary cell to generate the addition condition configuration information for the candidate secondary node/primary secondary cell and/or the configuration information for the candidate secondary node/primary secondary cell based on the measurement result of the terminal device.

In one embodiment, the above method may further include:
receiving the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell comprising at least one of:
the addition condition configuration information for the candidate secondary node/primary secondary cell;
configuration information for a primary secondary cell in the candidate secondary node;
configuration information for at least one secondary cell in the candidate secondary node; and
addition condition configuration information for at least one secondary cell in the candidate secondary node.

Alternatively, in another embodiment, the above method may further include:
receiving the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell comprising at least one of:
the addition condition configuration information for the candidate secondary node/primary secondary cell;
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

In some embodiments, the master node may transmit the key of the candidate secondary node/primary secondary cell to the at least one candidate secondary node/primary secondary cell.

In some embodiments, the above method may further include: transmitting, to the source secondary node/primary secondary cell, at least one of:
the measurement result of the terminal device; and
a condition release indication for the source secondary node/primary secondary cell.

Optionally, the above method may further include:
receiving the release condition configuration information for the source secondary node/primary secondary cell transmitted by the source secondary node/primary secondary cell.

Corresponding to the above Embodiment 3, the above method may further include: transmitting, to the source secondary node/primary secondary cell, at least one of:
a measurement result of the terminal device; and
a condition change indication for the secondary node/primary secondary cell.

Optionally, the above method may further include: receiving at least one of the following transmitted by the source secondary node/primary secondary cell:
the configuration information for changing the secondary node/primary secondary cell; and
identity information of the candidate secondary node/primary secondary cell.

Optionally, the above method may further include: transmitting, to each candidate secondary node/primary secondary cell, at least one of:
the measurement result of the terminal device;
the addition condition configuration information for the candidate secondary node/primary secondary cell;
an identity of at least one candidate secondary node/primary secondary cell; and
a key of the candidate secondary node/primary secondary cell.

In an embodiment, the above method may further include: receiving at least one of the following transmitted by each candidate secondary node/primary secondary cell:
configuration information for a primary secondary cell in the candidate secondary node;
configuration information for at least one secondary cell in the candidate secondary node; and
addition condition configuration information for at least one secondary cell in the candidate secondary node.

Alternatively, in another embodiment, the above method may further include: receiving at least one of the following transmitted by each candidate secondary node/primary secondary cell:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

In an embodiment, the above method may further include: receiving at least one of the following transmitted by each candidate secondary node/primary secondary cell:
a secondary cell group counter; and
an identity of at least one candidate secondary node/primary secondary cell.

In some embodiments, the above addition condition configuration information for the candidate SN/PSCell may have at least the following situations:
when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate SN/PSCell is based on Event B1;
when the original configuration before the changing is NE-DC, and the target configuration after the changing is NR-DC, the addition condition configuration information for the candidate SN/PSCell is based on Event A4;
when the original configuration before the changing is NR-DC, and the target configuration after the changing is NR-DC, the addition condition configuration information for the candidate SN/PSCell is based on EventA4; and
when the original configuration before the changing is NR-DC, and the target configuration after the changing is NE-DC, the addition condition configuration information for the candidate SN/PSCell is based on Event B 1.

In some embodiments, the above addition condition configuration information for the candidate SN/PSCell may depend on the entity configuring the condition, for example:
when the addition condition configuration information for the candidate SN/PSCell is configured by the candidate SN/PSCell, the addition condition configuration information for the candidate SN/PSCell is based on Events A3 and B5.

In some embodiments, the above release condition configuration information for the source SN/PSCell may have at least the following situations:
when an original configuration before the changing is NGEN-DC, EN-DC, NE-DC, or NR-DC, the release condition configuration information for the source SN/PSCell is determined based on a measurement result of a serving cell.

In some embodiments, the above configuration information for changing the SN/PSCell may include at least the following situations:
when the original configuration before the changing is NE-DC, and the target configuration after the changing is NR-DC, the configuration information for changing the SN/PSCell is based on Event B1;
when the original configuration before the changing is NR-DC, and the target configuration after the changing is NR-DC, the configuration information for changing the SN/PSCell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the SN/PSCell is based on Event B 1.

In one embodiment, the above method may further include:
receiving a first GRPS Tunneling Protocol (GTP) tunnel establishment request transmitted by the candidate secondary node, the first GTP tunnel establishment request containing a GTP tunnel identifier allocated by the candidate secondary node for the master node and an Access and Mobility Management Function (AMF)/User Plane Function (UPF);
transmitting a second GTP tunnel establishment request to the source secondary node, the second GTP tunnel establishment request containing a GTP tunnel identifier allocated by the master node for the source secondary node;
receiving a second GTP tunnel establishment confirmation message transmitted by the source secondary node;
transmitting a third GTP tunnel establishment request to the AMF/UPF, the third GTP tunnel establishment request containing a GTP tunnel identifier allocated by the candidate secondary node for the AMF/UPF;
receiving a third GTP tunnel establishment confirmation message transmitted by the AMF/UPF, the third GTP tunnel establishment confirmation message containing a GTP tunnel identifier allocated by the AMF/UPF for the candidate secondary node; and
transmitting a first GTP tunnel establishment confirmation message to the candidate secondary node, the first GTP tunnel establishment confirmation message containing the GTP tunnel identifier allocated by the AMF/UPF for the candidate secondary node and the GTP tunnel identifier allocated by the master node for the candidate secondary node.

In one embodiment, the above method may further include:
receiving a first GTP tunnel activation request transmitted by the candidate secondary node;
transmitting a second GTP tunnel activation request to the source secondary node;
receiving a second GTP tunnel activation confirmation message transmitted by the source secondary node;
transmitting a third GTP tunnel activation request to the AMF/UPF;
receiving the third GTP tunnel activation confirmation message transmitted by the AMF/UPF; and
transmitting a first GTP tunnel activation confirmation message to the candidate secondary node.

With the above process, the GTP tunnel between the MN and the source SN/PSCell, the GTP tunnel between the MN and the candidate SN/PSCell, and the GTP tunnel between the AMF/UPF and the candidate SN/PSCell are established or activated. With the GTP tunnels, optionally, the above method may further include: receiving, by the master node, data transmitted by the source secondary node; and forwarding, by the master node, the data to the candidate secondary node.

An embodiment also provides a condition-based secondary node or primary secondary cell change method, which can be applied in a candidate secondary node. FIG. 10 is an implementation flowchart of a condition-based SN/PSCell change method 1000 according to an embodiment of the present disclosure, including the following steps.

At S1010, configuration information for changing a secondary node/primary secondary cell is transmitted to a master node. The configuration information for changing the secondary node/primary secondary cell includes at least one of: addition condition configuration information for the candidate secondary node/primary secondary cell; and configuration information for the candidate secondary node/primary secondary cell.

Optionally, the above addition condition configuration information for the candidate secondary node/primary secondary cell may include:
addition condition configuration information configured for each individual candidate secondary node/primary secondary cell; and/or
same addition condition configuration information configured for all candidate secondary nodes/primary secondary cells.

Optionally, the configuration information for the candidate secondary node/primary secondary cell may include at least one of:
configuration information for a primary secondary cell in the candidate secondary node;
configuration information for at least one secondary cell in the candidate secondary node; and
addition condition configuration information for at least one secondary cell in the candidate secondary node.

Optionally, the configuration information for the candidate secondary node/primary secondary cell may include at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

Optionally, the above method may further include, before the operation of transmitting:
receiving information transmitted by the master node, and determining the configuration information for the candidate secondary node/primary secondary cell based on the information transmitted by the master node, the information transmitted by the master node comprising at least one of:
the addition condition configuration information for the candidate secondary node/primary secondary cell;
a measurement result of terminal device;
a condition addition indication for the secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
information on at least one secondary cell in the candidate secondary node.

Optionally, the above method may further include, before the operation of transmitting:
receiving information transmitted by the master node, and determining the configuration information for changing the secondary node/primary secondary cell based on the information transmitted by the master node, the information transmitted by the master node comprising at least one of:
a measurement result of terminal device; and
configuration information indication that notifies the candidate secondary node to generate the configuration information for changing the secondary node/primary secondary cell based on the measurement result of the terminal device.

Optionally, the information transmitted by the master node may further include at least one of:
a key of the candidate secondary node/primary secondary cell; and
an identity of at least one candidate secondary node/primary secondary cell.

In some embodiments, the above addition condition configuration information for the candidate SN/PSCell may have at least the following situations:
when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate SN/PSCell is based on Event B1;
when the original configuration before the changing is NE-DC, and the target configuration after the changing is NR-DC, the addition condition configuration information for the candidate SN/PSCell is based on EventA4;
when the original configuration before the changing is NR-DC, and the target configuration after the changing is NR-DC, the addition condition configuration information for the candidate SN/PSCell is based on Event A4; and
when the original configuration before the changing is NR-DC, and the target configuration after the changing is NE-DC, the addition condition configuration information for the candidate SN/PSCell is based on Event B1.

In some embodiments, the above addition condition configuration information for the candidate SN/PSCell may depend on the entity configuring the condition, for example:
when the addition condition configuration information for the candidate SN/PSCell is configured by the candidate SN/PSCell, the addition condition configuration information for the candidate SN/PSCell is based on Events A3 and B5.

In some embodiments, the above release condition configuration information for the source SN/PSCell may have at least the following situations:
when an original configuration before the changing is NGEN-DC, EN-DC, NE-DC, or NR-DC, the release condition configuration information for the source SN/PSCell is determined based on a measurement result of a serving cell.

In some embodiments, the above configuration information for changing the SN/PSCell may include at least the following situations:
when the original configuration before the changing is NE-DC, and the target configuration after the changing is NR-DC, the configuration information for changing the SN/PSCell is based on Event B1;
when the original configuration before the changing is NR-DC, and the target configuration after the changing is NR-DC, the configuration information for changing the SN/PSCell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the SN/PSCell is based on Event B1.

Optionally, the above method may further include:
transmitting a first GTP tunnel establishment request to a master node, the first GTP tunnel establishment request containing a GTP tunnel identifier allocated by the candidate secondary node for the master node and an AMF/UPF; and
receiving a first GTP tunnel establishment confirmation message transmitted by the master node, the first GTP tunnel establishment confirmation message containing a GTP tunnel identifier allocated by the AMF/UPF for the candidate secondary node and a GTP tunnel identifier allocated by the master node for the candidate secondary node.

Optionally, the above method may further include:
transmitting a first GTP tunnel activation request to the master node; and
receiving a first GTP tunnel activation confirmation message transmitted by the master node.

With the above process, the GTP tunnel between the MN and the source SN/PSCell, the GTP tunnel between the MN and the candidate SN/PSCell, and the GTP tunnel between the AMF/UPF and the candidate SN/PSCell are established or activated. With the GTP tunnels, optionally, the above method may further include: receiving data forwarded by the master node; and/or receiving data forwarded by the AMF/UPF.

An embodiment also provides a condition-based secondary node or primary secondary cell change method, which can be applied in a source secondary node. FIG. 11 is an implementation flowchart of a condition-based SN/PSCell change method 1100 according to an embodiment of the present disclosure, including the following steps.

At 51110, configuration information for changing a secondary node/primary secondary cell is transmitted to a master node.

The configuration information for changing the secondary node/primary secondary cell includes at least one of:
addition condition configuration information for a candidate secondary node/primary secondary cell; and
release condition configuration information for the source secondary node/primary secondary cell.

Optionally, the above addition condition configuration information for the candidate secondary node/primary secondary cell may include:
addition condition configuration information configured for each individual candidate secondary node/primary secondary cell; and/or
same addition condition configuration information configured for all candidate secondary nodes/primary secondary cells.

Optionally, the above method may further include, before the operation of transmitting:
receiving information transmitted by the master node, and determining the configuration information for changing the secondary node/primary secondary cell based on the information transmitted by the master node, the information transmitted by the master node including at least one of:
a measurement result of a terminal device;
a condition release indication of the source secondary node/primary secondary cell; and
a condition change indication for the secondary node/primary secondary cell.

In some embodiments, the above addition condition configuration information for the candidate SN/PSCell may have at least the following situations:
when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate SN/PSCell is based on Event B1;
when the original configuration before the changing is NE-DC, and the target configuration after the changing is NR-DC, the addition condition configuration information for the candidate SN/PSCell is based on Event A4;
when the original configuration before the changing is NR-DC, and the target configuration after the changing is NR-DC, the addition condition configuration information for the candidate SN/PSCell is based on Event A4; and
when the original configuration before the changing is NR-DC, and the target configuration after the changing is NE-DC, the addition condition configuration information for the candidate SN/PSCell is based on Event B 1.

In some embodiments, the above addition condition configuration information for the candidate SN/PSCell may depend on the entity configuring the condition, for example:
when the addition condition configuration information for the candidate SN/PSCell is configured by the candidate SN/PSCell, the addition condition configuration information for the candidate SN/PSCell is based on Events A3 and B5.

In some embodiments, the above release condition configuration information for the source SN/PSCell may have at least the following situations:
when an original configuration before the changing is NGEN-DC, EN-DC, NE-DC, or NR-DC, the release condition configuration information for the source SN/PSCell is determined based on a measurement result of a serving cell.

In some embodiments, the above configuration information for changing the SN/PSCell may include at least the following situations:
when the original configuration before the changing is NE-DC, and the target configuration after the changing is NR-DC, the configuration information for changing the SN/PSCell is based on Event B1;
when the original configuration before the changing is NR-DC, and the target configuration after the changing is NR-DC, the configuration information for changing the SN/PSCell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the SN/PSCell is based on Event B1.

Optionally, the above method may further include:
receiving a second GTP tunnel establishment request transmitted by the master node, the second GTP tunnel establishment request containing a GTP tunnel identifier allocated by the master node for the source secondary node; and
transmitting a second GTP tunnel establishment confirmation message to the master node.

Optionally, the above method may further include:
receiving a second GTP tunnel activation request transmitted by the master node; and
transmitting a second GTP tunnel activation confirmation message to the master node.

Optionally, the above method may further include: transmitting data to the master node.

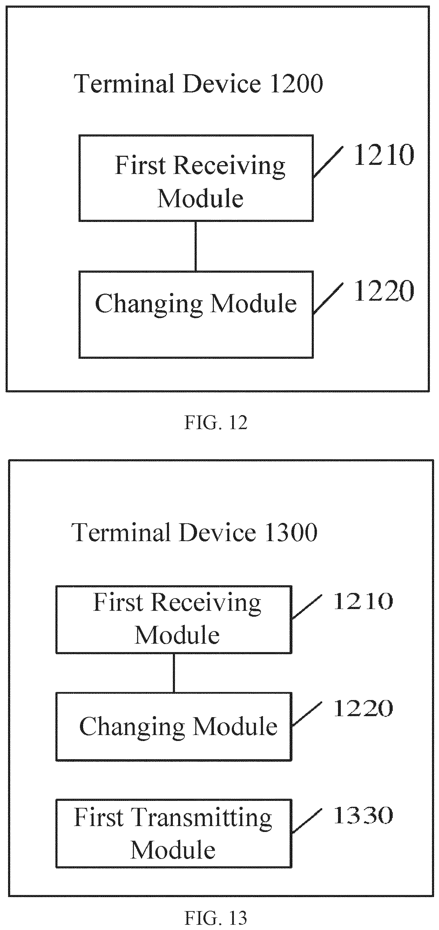

An embodiment of the present disclosure further provides a terminal device. FIG. 12 is a schematic diagram showing a structure of a terminal device 1200 according to an embodiment of the present disclosure. The terminal device 1200 includes:
a first receiving module 1210 configured to receive configuration information for changing a secondary node/primary secondary cell; and
a changing module 1220 configured to change the secondary node/primary secondary cell based on the configuration information for changing the secondary node/primary secondary cell.

The configuration information for changing the secondary node/primary secondary cell includes at least one of:
addition condition configuration information for a candidate secondary node/primary secondary cell;
configuration information for the candidate secondary node/primary secondary cell; and
release condition configuration information for a source secondary node/primary secondary cell.

Optionally, the above addition condition configuration information for the candidate secondary node/primary secondary cell may include:
addition condition configuration information configured for each individual candidate secondary node/primary secondary cell; and/or
same addition condition configuration information configured for all candidate secondary nodes/primary secondary cells.

Optionally, the above configuration information for the candidate secondary node/primary secondary cell may include at least one of:
configuration information for a primary secondary cell in the candidate secondary node;
configuration information for at least one secondary cell in the candidate secondary node; and
addition condition configuration information for at least one secondary cell in the candidate secondary node.

Optionally, the above configuration information for the candidate secondary node/primary secondary cell may include at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

Optionally, as shown in FIG. 13 , the above terminal device may further include:
a first transmitting module 1330 configured to transmit a measurement result of the terminal device to a master node, the measurement result being used to generate the configuration information for changing the secondary node/primary secondary cell.

Optionally, when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate secondary node/primary secondary cell is based on Event B 1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B 1.

Optionally, when the addition condition configuration information for the candidate secondary node/primary secondary cell is configured by the candidate secondary node/primary secondary cell, the addition condition configuration information for the candidate secondary node/primary secondary cell is based on Events A3 and B5.

Optionally, when an original configuration before the changing is NGEN-DC, EN-DC, NE-DC, or NR-DC, the release condition configuration information for the source secondary node/primary secondary cell is determined based on a measurement result of a serving cell.

Optionally, when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B 1.

Optionally, the above changing module 1220 may be configured to:
initiate a random access procedure towards the candidate secondary node/primary secondary cell corresponding to the addition condition configuration information for the candidate secondary node/primary secondary cell when a current condition satisfies the addition condition configuration information for the candidate secondary node/primary secondary cell, and satisfies the release condition configuration information for the source secondary node/primary secondary cell;
initiate a random access procedure towards the candidate secondary node/primary secondary cell corresponding to the addition condition configuration information for the candidate secondary node/primary secondary cell when a current condition satisfies the addition condition configuration information for the candidate secondary node/primary secondary cell, and but does not satisfy the release condition configuration information for the source secondary node/primary secondary cell; or
determine whether to initiate a random access procedure towards the candidate secondary node/primary secondary cell corresponding to the addition condition configuration information for the candidate secondary node/primary secondary cell according to a predetermined processing scheme when a current condition satisfies the addition condition configuration information for the candidate secondary node/primary secondary cell, and but does not satisfy the release condition configuration information for the source secondary node/primary secondary cell.

Optionally, the above configuration information for changing the secondary node/primary secondary cell may further include at least one of:
a secondary cell group counter; and
an identity of at least one candidate secondary node/primary secondary cell.

It can be appreciated that the above and other operations and/or functions of the modules in the terminal device according to the embodiment of the present disclosure are provided to implement the respective processes of the terminal device in the method 300 in FIG. 3, and details thereof will be omitted here.

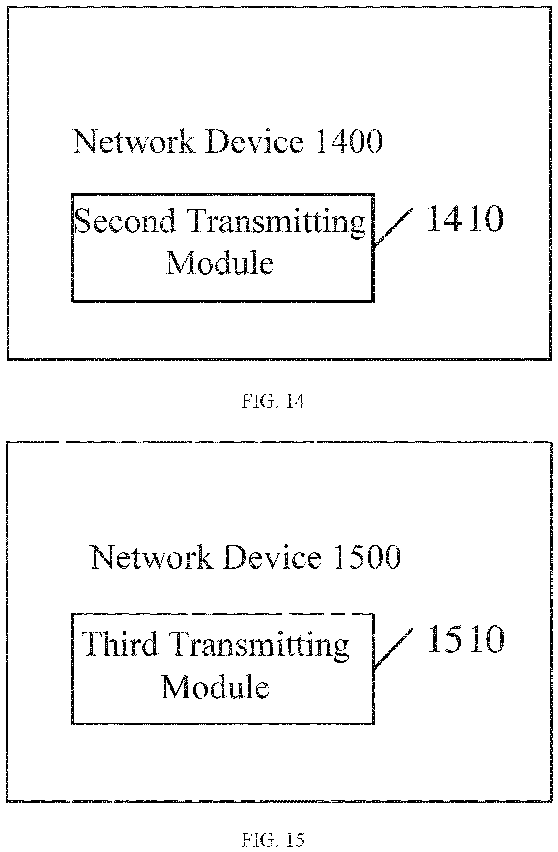

An embodiment of the present disclosure also provides a network device, which can serve as the above MN. FIG. 14 is a schematic diagram showing a structure of a network device 1300 according to an embodiment of the present disclosure. The network device 1300 includes:
a second transmitting module 1410 configured to transmit configuration information for changing a secondary node/primary secondary cell to a terminal device.

The configuration information for changing the secondary node/primary secondary cell includes at least one of:
addition condition configuration information for a candidate secondary node/primary secondary cell;
configuration information for the candidate secondary node/primary secondary cell; and
release condition configuration information for a source secondary node/primary secondary cell.

Optionally, the above addition condition configuration information for the candidate secondary node/primary secondary cell may include:
addition condition configuration information configured for each individual candidate secondary node/primary secondary cell; and/or
same addition condition configuration information configured for all candidate secondary nodes/primary secondary cells.

Optionally, the above configuration information for the candidate secondary node/primary secondary cell may include at least one of:
configuration information for a primary secondary cell in the candidate secondary node;
configuration information for at least one secondary cell in the candidate secondary node; and
addition condition configuration information for at least one secondary cell in the candidate secondary node.

Optionally, the above configuration information for the candidate secondary node/primary secondary cell may include at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

Optionally, the above configuration information for changing the secondary node/primary secondary cell may further include at least one of:
a secondary cell group counter; and
an identity of at least one candidate secondary node/primary secondary cell.

Optionally, the above network device may be further configured to: receive a measurement result of the terminal device, the measurement result being used to generate the configuration information for changing the secondary node/primary secondary cell.

Optionally, the above network device may be further configured to determine at least one candidate secondary node/primary secondary cell and generate the addition condition configuration information for the candidate secondary node/primary secondary cell and/or the release conditional configuration information for the source secondary node/primary secondary cell, based on a measurement result of the terminal device; and
transmit, to the at least one candidate secondary node/primary secondary cell, at least one of:
the addition condition configuration information for the candidate secondary node/primary secondary cell;
the measurement result of terminal device;
a condition addition indication for the candidate secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
configuration information for at least one secondary cell in the secondary node.

Optionally, the above network device may be further configured to receive the configuration information for the candidate secondary node/primary secondary cell transmitted by the at least one candidate secondary node/primary secondary cell.

Optionally, the above network device may be further configured to transmit, to the source secondary node/primary secondary cell, at least one of:
the release condition configuration information for the source secondary node/primary secondary cell;
the measurement result of the terminal device; and
a condition release indication for the source secondary node/primary secondary cell.

Optionally, the above network device may be further configured to determine at least one candidate secondary node/primary secondary cell based on a measurement result of the terminal device; and
transmit, to the at least one candidate secondary node/primary secondary cell, at least one of:
the measurement result of the terminal device; and
configuration information indication that notifies the candidate secondary node/primary secondary cell to generate the addition condition configuration information for the candidate secondary node/primary secondary cell and/or the configuration information for the candidate secondary node/primary secondary cell based on the measurement result of the terminal device.

Optionally, the above network device may be further configured to receive the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell including at least one of:
the addition condition configuration information for the candidate secondary node/primary secondary cell;
configuration information for a primary secondary cell in the candidate secondary node;
configuration information for at least one secondary cell in the candidate secondary node; and
addition condition configuration information for at least one secondary cell in the candidate secondary node.

Optionally, the above network device may be further configured to receive the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell including at least one of:
the addition condition configuration information for the candidate secondary node/primary secondary cell;
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

Optionally, the above network device may be further configured to transmit the key of the candidate secondary node/primary secondary cell to the at least one candidate secondary node/primary secondary cell.

Optionally, the above network device may be further configured to transmit, to the source secondary node/primary secondary cell, at least one of:
the measurement result of the terminal device; and
a condition release indication for the source secondary node/primary secondary cell.

Optionally, the above network device may be further configured to receive the release condition configuration information for the source secondary node/primary secondary cell transmitted by the source secondary node/primary secondary cell.

Optionally, the above network device may be further configured to transmit, to the source secondary node/primary secondary cell, at least one of:
a measurement result of the terminal device; and
a condition change indication for the secondary node/primary secondary cell.

Optionally, the above network device may be further configured to: receive at least one of the following transmitted by the source secondary node/primary secondary cell:
the configuration information for changing the secondary node/primary secondary cell; and
identity information of the candidate secondary node/primary secondary cell.

Optionally, the above network device may be further configured to: transmit, to each candidate secondary node/primary secondary cell, at least one of:
the measurement result of the terminal device;
the addition condition configuration information for the candidate secondary node/primary secondary cell;
an identity of at least one candidate secondary node/primary secondary cell; and
a key of the candidate secondary node/primary secondary cell.

Optionally, the above network device may be further configured to: receive at least one of the following transmitted by each candidate secondary node/primary secondary cell:
configuration information for a primary secondary cell in the candidate secondary node;
configuration information for at least one secondary cell in the candidate secondary node; and
addition condition configuration information for at least one secondary cell in the candidate secondary node.

Optionally, the above network device may be further configured to: receive at least one of the following transmitted by each candidate secondary node/primary secondary cell:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

Optionally, the above network device may be further configured to: receive at least one of the following transmitted by each candidate secondary node/primary secondary cell:
a secondary cell group counter; and
an identity of at least one candidate secondary node/primary secondary cell.

Optionally, when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B 1.

Optionally, when the addition condition configuration information for the candidate secondary node/primary secondary cell is configured by the candidate secondary node/primary secondary cell, the addition condition configuration information for the candidate secondary node/primary secondary cell is based on Events A3 and B5.

Optionally, when an original configuration before the changing is NGEN-DC, EN-DC, NE-DC, or NR-DC, the release condition configuration information for the source secondary node/primary secondary cell is determined based on a measurement result of a serving cell.

Optionally, when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B 1.

Optionally, the above network device may be further configured to:
receive a first GRPS Tunneling Protocol (GTP) tunnel establishment request transmitted by the candidate secondary node, the first GTP tunnel establishment request containing a GTP tunnel identifier allocated by the candidate secondary node for the master node and an Access and Mobility Management Function (AMF)/User Plane Function (UPF);
transmit a second GTP tunnel establishment request to the source secondary node, the second GTP tunnel establishment request containing a GTP tunnel identifier allocated by the master node for the source secondary node;
receive a second GTP tunnel establishment confirmation message transmitted by the source secondary node;
transmit a third GTP tunnel establishment request to the AMF/UPF, the third GTP tunnel establishment request containing a GTP tunnel identifier allocated by the candidate secondary node for the AMF/UPF;
receive a third GTP tunnel establishment confirmation message transmitted by the AMF/UPF, the third GTP tunnel establishment confirmation message containing a GTP tunnel identifier allocated by the AMF/UPF for the candidate secondary node;
transmit a first GTP tunnel establishment confirmation message to the candidate secondary node, the first GTP tunnel establishment confirmation message containing the GTP tunnel identifier allocated by the AMF/UPF for the candidate secondary node and the GTP tunnel identifier allocated by the master node for the candidate secondary node.

Optionally, the above network device may be further configured to:
receive a first GTP tunnel activation request transmitted by the candidate secondary node;
transmit a second GTP tunnel activation request to the source secondary node;
receive a second GTP tunnel activation confirmation message transmitted by the source secondary node;
transmit a third GTP tunnel activation request to the AMF/UPF;
receive the third GTP tunnel activation confirmation message transmitted by the AMF/UPF; and
transmit a first GTP tunnel activation confirmation message to the candidate secondary node.

Optionally, the above network device may be further configured to:
receive, by the master node, data transmitted by the source secondary node; and
forward, by the master node, the data to the candidate secondary node.

It should be understood that the above and other operations and/or functions of the modules in the network device according to the embodiment of the present disclosure are provided to implement the respective processes of the MN in the method 900 in FIG. 9, and details thereof will be omitted here.

An embodiment of the present disclosure also provides a network device, which can serve as the above candidate SN/PSCell. FIG. 15 is a schematic diagram showing a structure of a network device 1500 according to an embodiment of the present disclosure. The network device 1500 includes:
a third transmitting module 1510 configured to transmit configuration information for changing a secondary node/primary secondary cell to a master node.

The configuration information for changing the secondary node/primary secondary cell includes at least one of:
addition condition configuration information for the candidate secondary node/primary secondary cell; and
configuration information for the candidate secondary node/primary secondary cell.

Optionally, the above addition condition configuration information for the candidate secondary node/primary secondary cell may include:
addition condition configuration information configured for each individual candidate secondary node/primary secondary cell; and/or
same addition condition configuration information configured for all candidate secondary nodes/primary secondary cells.

Optionally, the above configuration information for the candidate secondary node/primary secondary cell may include at least one of:
configuration information for a primary secondary cell in the candidate secondary node;
configuration information for at least one secondary cell in the candidate secondary node; and
addition condition configuration information for at least one secondary cell in the candidate secondary node.

Optionally, the above configuration information for the candidate secondary node/primary secondary cell may include at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

Optionally, the above network device may be further configured to:
receive information transmitted by the master node, and determining the configuration information for the candidate secondary node/primary secondary cell based on the information transmitted by the master node, the information transmitted by the master node including at least one of:
the addition condition configuration information for the candidate secondary node/primary secondary cell;
a measurement result of terminal device;
a condition addition indication for the secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
information on at least one secondary cell in the candidate secondary node.

Optionally, the above network device may be further configured to:
receive information transmitted by the master node, and determining the configuration information for changing the secondary node/primary secondary cell based on the information transmitted by the master node, the information transmitted by the master node including at least one of:
a measurement result of terminal device; and
configuration information indication that notifies the candidate secondary node to generate the configuration information for changing the secondary node/primary secondary cell based on the measurement result of the terminal device.

Optionally, the information transmitted by the master node may further include at least one of:
a key of the candidate secondary node/primary secondary cell; and
an identity of at least one candidate secondary node/primary secondary cell.

Optionally, when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B1.

Optionally, when the addition condition configuration information for the candidate secondary node/primary secondary cell is configured by the candidate secondary node/primary secondary cell, the addition condition configuration information for the candidate secondary node/primary secondary cell is based on Events A3 and B5.

Optionally, when an original configuration before the changing is NGEN-DC, EN-DC, NE-DC, or NR-DC, the release condition configuration information for the source secondary node/primary secondary cell is determined based on a measurement result of a serving cell.

Optionally, when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

Optionally, the above network device may be further configured to:
transmit a first GTP tunnel establishment request to a master node, the first GTP tunnel establishment request containing a GTP tunnel identifier allocated by the candidate secondary node for the master node and an AMF/UPF; and
receive a first GTP tunnel establishment confirmation message transmitted by the master node, the first GTP tunnel establishment confirmation message containing a GTP tunnel identifier allocated by the AMF/UPF for the candidate secondary node and a GTP tunnel identifier allocated by the master node for the candidate secondary node.

Optionally, the above network device may be further configured to:
transmit a first GTP tunnel activation request to the master node; and
receive a first GTP tunnel activation confirmation message transmitted by the master node.

Optionally, the above network device may be further configured to:
receive data forwarded by the master node; and/or
receive data forwarded by the AMF/UPF.

It can be appreciated that the above and other operations and/or functions of the modules in the network device according to the embodiment of the present disclosure are provided to implement the respective processes of the candidate SN/PSCell in the method 1000 of FIG. 10, and details thereof will be omitted here.

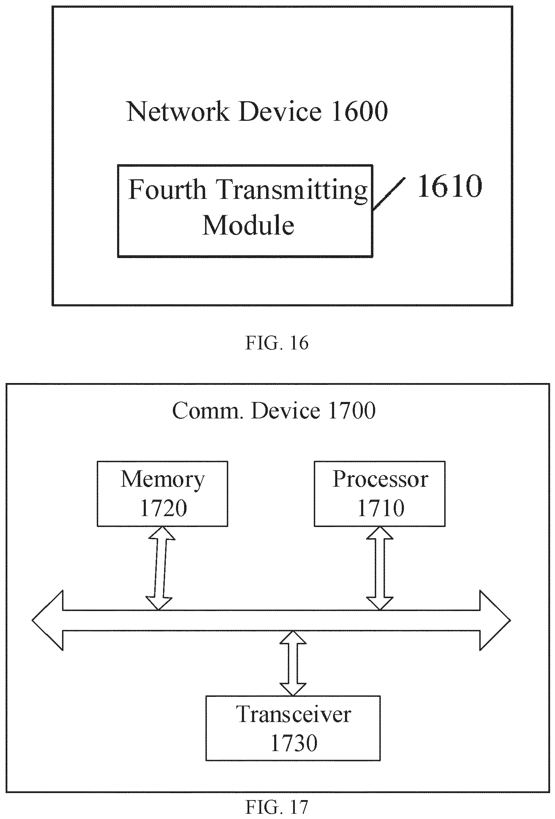

An embodiment of the present disclosure also provides a network device, which can serve as the above source SN/PSCell. FIG. 16 is a schematic diagram showing a structure of a network device 1600 according to an embodiment of the present disclosure. The network device 1600 includes:
a fourth transmitting module 1610 configured to transmit configuration information for changing a secondary node/primary secondary cell to a master node.

The configuration information for changing the secondary node/primary secondary cell includes at least one of:
addition condition configuration information for a candidate secondary node/primary secondary cell; and
release condition configuration information for the source secondary node/primary secondary cell.

Optionally, the above addition condition configuration information for the candidate secondary node/primary secondary cell may include:
addition condition configuration information configured for each individual candidate secondary node/primary secondary cell; and/or
same addition condition configuration information configured for all candidate secondary nodes/primary secondary cells.

Optionally, the above network device may be further configured to:
receive information transmitted by the master node, and determine the configuration information for changing the secondary node/primary secondary cell based on the information transmitted by the master node, the information transmitted by the master node including at least one of:
a measurement result of a terminal device;
a condition release indication of the source secondary node/primary secondary cell; and
a condition change indication for the secondary node/primary secondary cell.

Optionally, when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B 1.

Optionally, when the addition condition configuration information for the candidate secondary node/primary secondary cell is configured by the candidate secondary node/primary secondary cell, the addition condition configuration information for the candidate secondary node/primary secondary cell is based on Events A3 and B5.

Optionally, when an original configuration before the changing is NGEN-DC, EN-DC, NE-DC, or NR-DC, the release condition configuration information for the source secondary node/primary secondary cell is determined based on a measurement result of a serving cell.

Optionally, when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B 1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

Optionally, the above network device may be further configured to:
receive a second GTP tunnel establishment request transmitted by the master node, the second GTP tunnel establishment request containing a GTP tunnel identifier allocated by the master node for the source secondary node; and
transmit a second GTP tunnel establishment confirmation message to the master node.

Optionally, the above network device may be further configured to:
receive a second GTP tunnel activation request transmitted by the master node; and
transmit a second GTP tunnel activation confirmation message to the master node.

Optionally, the above network device may be further configured to: transmit data to the master node.

It can be appreciated that the above and other operations and/or functions of the modules in the network device according to the embodiment of the present disclosure are provided to implement the respective processes of the source SN/PSCell in the method 1100 of FIG. 11, and details thereof will be omitted here.

FIG. 17 is a schematic diagram showing a structure of a communication device 1700 according to an embodiment of the present disclosure. The communication device 1700 shown in FIG. 17 includes a processor 1710, and the processor 1710 can invoke and execute a computer program from a memory to perform the method according to any one of the embodiments of the present disclosure.

Optionally, as shown in FIG. 17, the communication device 1700 may further include a memory 1720. The processor 1710 can invoke and execute a computer program from the memory 1720 to perform the method according to any one of the embodiments of the present disclosure.

Here, the memory 1720 may be a separate device independent of the processor 1710, or may be integrated in the processor 1710.

Optionally, the communication device 1700 may further include a transceiver 1730. The processor 1710 can control the transceiver 1730 to communicate with other devices, and in particular to transmit information or data to other devices or receive information or data transmitted by other devices.

Here, the transceiver 1730 may include a transmitter and a receiver. The transceiver 1730 may further include one or more antennas.

Optionally, the communication device 1700 may be a first terminal device in the embodiment of the present disclosure, and the communication device 1700 can perform corresponding procedures implemented by the first terminal device in the method according to any one of the embodiments of the present disclosure. Details thereof will be omitted here for simplicity.

Optionally, the communication device 600 may be the communication device, e.g., the network device or a second terminal device, in the embodiment of the present disclosure, and the communication device 1700 can perform corresponding procedures implemented by the communication device in the method according to any one of the embodiments of the present disclosure. Details thereof will be omitted here for simplicity.

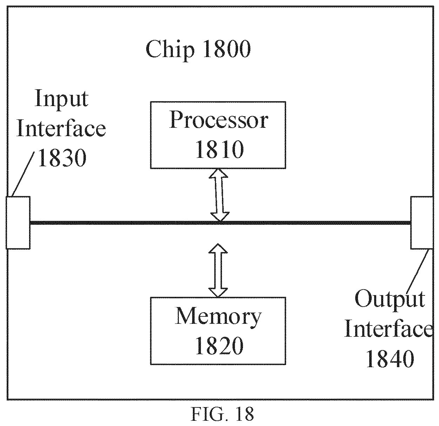

FIG. 18 is a schematic diagram showing a structure of a chip 1800 according to an embodiment of the present disclosure. The chip 1800 shown in FIG. 18 includes a processor 810, and the processor 810 can invoke and execute a computer program from a memory to implement the method in the embodiment of the present disclosure.

Optionally, as shown in FIG. 18, the chip 1800 may further include a memory 1820. The processor 1810 can invoke and execute a computer program from the memory 1820 to implement the method according to any one of the embodiments of the present disclosure.

Here, the memory 1820 may be a separate device independent from the processor 1810, or may be integrated in the processor 1810.

Optionally, the chip 1800 may further include an input interface 1830. The processor 1810 can control the input interface 1830 to communicate with other devices or chips, and in particular, obtain information or data transmitted by other devices or chips.

Optionally, the chip 1800 may further include an output interface 1840. The processor 1810 can control the output interface 1840 to communicate with other devices or chips, and in particular, output information or data to other devices or chips.

Optionally, the chip can be applied to the terminal device in the embodiment of the present disclosure, and the chip can implement the corresponding process implemented by the terminal device in the method according to any one of the embodiments of the present disclosure. For the sake of brevity, details thereof will be omitted here.

It can be appreciated that the chip in the embodiment of the present disclosure may be referred to as a system-level chip, a system-chip, a chip system, or a system-on-chip.

The processor as described above can be a general purpose processor, a Digital Signal Processor (DSP), a Field Programmable Gate Array (FPGA), an Application Specific Integrated Circuit (ASIC), or another programmable logic device, a transistor logic device, or a discrete hardware component. The above general purpose processor may be a microprocessor or any conventional processor.

The memory as described above may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM).

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

The above embodiments may be implemented in whole or in part by software, hardware, firmware, or any combination thereof. When implemented in software, it can be implemented in whole or in part in the form of a computer program product. The computer program product includes one or more computer instructions. When the computer program instructions are loaded and executed on a computer, all or part of the processes or functions described in the embodiments of the present disclosure are generated. The computer may be a general purpose computer, a special purpose computer, a computer network, or any other programmable device. The computer instructions may be stored in a computer-readable storage medium, or transmitted from one computer-readable storage medium to another. For example, the computer instructions may be transmitted from a website, computer, server, or data center to another website, computer, server, or data center via wired communication (e.g., coaxial cable, optical fiber, or Digital Subscriber Line (DSL)) or wireless communication (e.g., infrared, wireless, microwave, etc.). The computer-readable storage medium may be any available medium that can be accessed by a computer, or a data storage device including one or more available mediums, such as a server, a data center, etc. The available mediums may include magnetic mediums (e.g., floppy disks, hard disks, magnetic tapes), optical medium (e.g., Digital Video Disc (DVD)), or semiconductor mediums (e.g., Solid State Disk (SSD)), etc.

It can be appreciated that, in the embodiments of the present disclosure, the numbering of the above processes does not necessarily mean their execution order. The execution order of the processes should be determined based on their functions and internal logics. The implementations of the embodiments of the present disclosure are not limited to any specific execution order.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A condition-based secondary node or primary secondary cell change method, applied in a terminal device, the method comprising:
receiving configuration information for changing a secondary node/primary secondary cell; and
changing the secondary node/primary secondary cell based on the configuration information for changing the secondary node/primary secondary cell,
wherein the configuration information for changing the secondary node/primary secondary cell comprises at least one of:
addition condition configuration information for a candidate secondary node/primary secondary cell;
configuration information for the candidate secondary node/primary secondary cell; and
release condition configuration information for a source secondary node/primary secondary cell.

2. The method according to claim 1, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

3. The method according to claim 1 or 2, wherein the configuration information for the candidate secondary node/primary secondary cell comprises at least one of:
configuration information for a primary secondary cell in the candidate secondary node;
configuration information for at least one secondary cell in the candidate secondary node; and
addition condition configuration information for at least one secondary cell in the candidate secondary node.

4. The method according to claim 1 or 2, wherein the configuration information for the candidate secondary node/primary secondary cell comprises at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

5. The method according to any one of claims 1 to 4, further comprising, prior to receiving the configuration information for changing the secondary node/primary secondary cell:
transmitting a measurement result of the terminal device to a master node, the measurement result being used to generate the configuration information for changing the secondary node/primary secondary cell.

6. The method according to any one of claims 1 to 5, wherein
when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B1.

7. The method according to any one of claims 1 to 5, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

8. The method according to any one of claims 1 to 5, wherein
when an original configuration before the changing is NGEN-DC, EN-DC, NE-DC, or NR-DC, the release condition configuration information for the source secondary node/primary secondary cell is determined based on a measurement result of a serving cell.

9. The method according to any one of claims 1 to 5, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B 1.

10. The method according to any one of claims 1 to 9, wherein said changing the secondary node/primary secondary cell based on the configuration information for changing the secondary node/primary secondary cell comprises:
initiating a random access procedure towards the candidate secondary node/primary secondary cell corresponding to the addition condition configuration information for the candidate secondary node/primary secondary cell when a current condition satisfies the addition condition configuration information for the candidate secondary node/primary secondary cell, and satisfies the release condition configuration information for the source secondary node/primary secondary cell;
initiating a random access procedure towards the candidate secondary node/primary secondary cell corresponding to the addition condition configuration information for the candidate secondary node/primary secondary cell when a current condition satisfies the addition condition configuration information for the candidate secondary node/primary secondary cell, and but does not satisfy the release condition configuration information for the source secondary node/primary secondary cell; or
determining whether to initiate a random access procedure towards the candidate secondary node/primary secondary cell corresponding to the addition condition configuration information for the candidate secondary node/primary secondary cell according to a predetermined processing scheme when a current condition satisfies the addition condition configuration information for the candidate secondary node/primary secondary cell, and but does not satisfy the release condition configuration information for the source secondary node/primary secondary cell.

11. The method according to any one of claims 1 to 10, wherein the configuration information for changing the secondary node/primary secondary cell further comprises at least one of:
a secondary cell group counter; and
an identity of at least one candidate secondary node/primary secondary cell.

12. A condition-based secondary node or primary secondary cell change method, applied in a master node, the method comprising:
transmitting configuration information for changing a secondary node/primary secondary cell to a terminal device, wherein the configuration information for changing the secondary node/primary secondary cell comprises at least one of:
addition condition configuration information for a candidate secondary node/primary secondary cell;
configuration information for the candidate secondary node/primary secondary cell; and
release condition configuration information for a source secondary node/primary secondary cell.

13. The method according to claim 12, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

14. The method according to claim 12 or 13, wherein the configuration information for the candidate secondary node/primary secondary cell comprises at least one of:
configuration information for a primary secondary cell in the candidate secondary node;
configuration information for at least one secondary cell in the candidate secondary node; and
addition condition configuration information for at least one secondary cell in the candidate secondary node.

15. The method according to claim 12 or 13, wherein the configuration information for the candidate secondary node/primary secondary cell comprises at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

16. The method according to any one of claims 12 to 15, wherein the configuration information for changing the secondary node/primary secondary cell further comprises at least one of:
a secondary cell group counter; and
an identity of at least one candidate secondary node/primary secondary cell.

17. The method according to any one of claims 12 to 16, further comprising, prior to said transmitting:
receiving a measurement result of the terminal device, the measurement result being used to generate the configuration information for changing the secondary node/primary secondary cell.

18. The method according to any one of claims 12 to 17, further comprising:
determining at least one candidate secondary node/primary secondary cell and generating the addition condition configuration information for the candidate secondary node/primary secondary cell and/or the release conditional configuration information for the source secondary node/primary secondary cell, based on a measurement result of the terminal device; and
transmitting, to the at least one candidate secondary node/primary secondary cell, at least one of:
the addition condition configuration information for the candidate secondary node/primary secondary cell;
the measurement result of terminal device;
a condition addition indication for the candidate secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
configuration information for at least one secondary cell in the secondary node.

19. The method according to claim 18, further comprising:
receiving the configuration information for the candidate secondary node/primary secondary cell transmitted by the at least one candidate secondary node/primary secondary cell.

20. The method according to claim 18 or 19, further comprising: transmitting, to the source secondary node/primary secondary cell, at least one of:
the release condition configuration information for the source secondary node/primary secondary cell;
the measurement result of the terminal device; and
a condition release indication for the source secondary node/primary secondary cell.

21. The method according to any one of claims 12 to 17, further comprising:
determining at least one candidate secondary node/primary secondary cell based on a measurement result of the terminal device; and
transmitting, to the at least one candidate secondary node/primary secondary cell, at least one of:
the measurement result of the terminal device; and
configuration information indication that notifies the candidate secondary node/primary secondary cell to generate the addition condition configuration information for the candidate secondary node/primary secondary cell and/or the configuration information for the candidate secondary node/primary secondary cell based on the measurement result of the terminal device.

22. The method according to claim 21, further comprising:
receiving the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell comprising at least one of:
the addition condition configuration information for the candidate secondary node/primary secondary cell;
configuration information for a primary secondary cell in the candidate secondary node;
configuration information for at least one secondary cell in the candidate secondary node; and
addition condition configuration information for at least one secondary cell in the candidate secondary node.

23. The method according to claim 21, further comprising:
receiving the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell comprising at least one of:
the addition condition configuration information for the candidate secondary node/primary secondary cell;
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

24. The method according to any one of claims 18 to 23, further comprising: transmitting, by the master node, the key of the candidate secondary node/primary secondary cell to the at least one candidate secondary node/primary secondary cell.

25. The method according to any one of claims 21 to 24, further comprising: transmitting, to the source secondary node/primary secondary cell, at least one of:
the measurement result of the terminal device; and
a condition release indication for the source secondary node/primary secondary cell.

26. The method according to claim 25, further comprising:
receiving the release condition configuration information for the source secondary node/primary secondary cell transmitted by the source secondary node/primary secondary cell.

27. The method according to any one of claims 12 to 17, further comprising: transmitting, to the source secondary node/primary secondary cell, at least one of:
a measurement result of the terminal device; and
a condition change indication for the secondary node/primary secondary cell.

28. The method according to claim 27, further comprising: receiving at least one of the following transmitted by the source secondary node/primary secondary cell:
the configuration information for changing the secondary node/primary secondary cell; and
identity information of the candidate secondary node/primary secondary cell.

29. The method according to claim 27 or 28, further comprising: transmitting, to each candidate secondary node/primary secondary cell, at least one of:
the measurement result of the terminal device;
the addition condition configuration information for the candidate secondary node/primary secondary cell;
an identity of at least one candidate secondary node/primary secondary cell; and
a key of the candidate secondary node/primary secondary cell.

30. The method according to claim 29, further comprising: receiving at least one of the following transmitted by each candidate secondary node/primary secondary cell:
configuration information for a primary secondary cell in the candidate secondary node;
configuration information for at least one secondary cell in the candidate secondary node; and
addition condition configuration information for at least one secondary cell in the candidate secondary node.

31. The method according to claim 29, further comprising: receiving at least one of the following transmitted by each candidate secondary node/primary secondary cell:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

32. The method according to claim 30 or 31, further comprising: receiving at least one of the following transmitted by each candidate secondary node/primary secondary cell:
a secondary cell group counter; and
an identity of at least one candidate secondary node/primary secondary cell.

33. The method according to any one of claims 12 to 32, wherein
when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B1.

34. The method according to any one of claims 12 to 32, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

35. The method according to any one of claims 12 to 32, wherein
when an original configuration before the changing is NGEN-DC, EN-DC, NE-DC, or NR-DC, the release condition configuration information for the source secondary node/primary secondary cell is determined based on a measurement result of a serving cell.

36. The method according to any one of claims 12 to 32, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

37. The method according to any one of claims 12 to 36, further comprising:
receiving a first GRPS Tunneling Protocol (GTP) tunnel establishment request transmitted by the candidate secondary node, the first GTP tunnel establishment request containing a GTP tunnel identifier allocated by the candidate secondary node for the master node and an Access and Mobility Management Function (AMF)/User Plane Function (UPF);
transmitting a second GTP tunnel establishment request to the source secondary node, the second GTP tunnel establishment request containing a GTP tunnel identifier allocated by the master node for the source secondary node;
receiving a second GTP tunnel establishment confirmation message transmitted by the source secondary node;
transmitting a third GTP tunnel establishment request to the AMF/LTPF, the third GTP tunnel establishment request containing a GTP tunnel identifier allocated by the candidate secondary node for the AMF/UPF;
receiving a third GTP tunnel establishment confirmation message transmitted by the AMF/UPF, the third GTP tunnel establishment confirmation message containing a GTP tunnel identifier allocated by the AMF/UPF for the candidate secondary node; and
transmitting a first GTP tunnel establishment confirmation message to the candidate secondary node, the first GTP tunnel establishment confirmation message containing the GTP tunnel identifier allocated by the AMF/UPF for the candidate secondary node and the GTP tunnel identifier allocated by the master node for the candidate secondary node.

38. The method according to any one of claims 12 to 36, further comprising:
receiving a first GTP tunnel activation request transmitted by the candidate secondary node;
transmitting a second GTP tunnel activation request to the source secondary node;
receiving a second GTP tunnel activation confirmation message transmitted by the source secondary node;
transmitting a third GTP tunnel activation request to the AMF/UPF;
receiving the third GTP tunnel activation confirmation message transmitted by the AMF/UPF; and
transmitting a first GTP tunnel activation confirmation message to the candidate secondary node.

39. The method according to claim 37 or 38, further comprising:
receiving, by the master node, data transmitted by the source secondary node; and
forwarding, by the master node, the data to the candidate secondary node.

40. A condition-based secondary node or primary secondary cell change method, applied in a candidate secondary node, the method comprising:
transmitting configuration information for changing a secondary node/primary secondary cell to a master node, wherein the configuration information for changing the secondary node/primary secondary cell comprises at least one of:
addition condition configuration information for the candidate secondary node/primary secondary cell; and
configuration information for the candidate secondary node/primary secondary cell.

41. The method according to claim 40, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

42. The method according to claim 40 or 41, wherein the configuration information for the candidate secondary node/primary secondary cell comprises at least one of:
configuration information for a primary secondary cell in the candidate secondary node;
configuration information for at least one secondary cell in the candidate secondary node; and
addition condition configuration information for at least one secondary cell in the candidate secondary node.

43. The method according to claim 40 or 41, wherein the configuration information for the candidate secondary node/primary secondary cell comprises at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

44. The method according to any one of claims 40 to 43, further comprising, prior to said transmitting:
receiving information transmitted by the master node, and determining the configuration information for the candidate secondary node/primary secondary cell based on the information transmitted by the master node, the information transmitted by the master node comprising at least one of:
the addition condition configuration information for the candidate secondary node/primary secondary cell;
a measurement result of terminal device;
a condition addition indication for the secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
information on at least one secondary cell in the candidate secondary node.

45. The method according to any one of claims 40 to 44, further comprising, prior to said transmitting:
receiving information transmitted by the master node, and determining the configuration information for changing the secondary node/primary secondary cell based on the information transmitted by the master node, the information transmitted by the master node comprising at least one of:
a measurement result of terminal device; and
configuration information indication that notifies the candidate secondary node to generate the configuration information for changing the secondary node/primary secondary cell based on the measurement result of the terminal device.

46. The method according to claim 45, wherein the information transmitted by the master node further comprises at least one of:
a key of the candidate secondary node/primary secondary cell; and
an identity of at least one candidate secondary node/primary secondary cell.

47. The method according to any one of claims 40 to 46, wherein
when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B 1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B 1.

48. The method according to any one of claims 40 to 46, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

49. The method according to any one of claims 40 to 46, wherein
when an original configuration before the changing is NGEN-DC, EN-DC, NE-DC, or NR-DC, the release condition configuration information for the source secondary node/primary secondary cell is determined based on a measurement result of a serving cell.

50. The method according to any one of claims 40 to 46, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

51. The method according to any one of claims 40 to 50, further comprising:
transmitting a first GTP tunnel establishment request to a master node, the first GTP tunnel establishment request containing a GTP tunnel identifier allocated by the candidate secondary node for the master node and an AMF/UPF; and
receiving a first GTP tunnel establishment confirmation message transmitted by the master node, the first GTP tunnel establishment confirmation message containing a GTP tunnel identifier allocated by the AMF/UPF for the candidate secondary node and a GTP tunnel identifier allocated by the master node for the candidate secondary node.

52. The method according to any one of claims 40 to 50, further comprising:
transmitting a first GTP tunnel activation request to the master node; and
receiving a first GTP tunnel activation confirmation message transmitted by the master node.

53. The method according to claim 51 or 52, further comprising:
receiving data forwarded by the master node; and/or
receiving data forwarded by the AMF/UPF.

54. A condition-based secondary node or primary secondary cell change method, applied in a source secondary node, the method comprising:
transmitting configuration information for changing a secondary node/primary secondary cell to a master node, wherein the configuration information for changing the secondary node/primary secondary cell comprises at least one of:
addition condition configuration information for a candidate secondary node/primary secondary cell; and
release condition configuration information for the source secondary node/primary secondary cell.

55. The method according to claim 54, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

56. The method according to claim 54 or 55, further comprising, prior to said transmitting:
receiving information transmitted by the master node, and determining the configuration information for changing the secondary node/primary secondary cell based on the information transmitted by the master node, the information transmitted by the master node comprising at least one of:
a measurement result of a terminal device;
a condition release indication of the source secondary node/primary secondary cell; and
a condition change indication for the secondary node/primary secondary cell.

57. The method according to any one of claims 54 to 56, wherein
when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B 1.

58. The method according to any one of claims 54 to 56, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

59. The method according to any one of claims 54 to 56, wherein
when an original configuration before the changing is NGEN-DC, EN-DC, NE-DC, or NR-DC, the release condition configuration information for the source secondary node/primary secondary cell is determined based on a measurement result of a serving cell.

60. The method according to any one of claims 54 to 56, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

61. The method according to any one of claims 54 to 60, further comprising:
receiving a second GTP tunnel establishment request transmitted by the master node, the second GTP tunnel establishment request containing a GTP tunnel identifier allocated by the master node for the source secondary node; and
transmitting a second GTP tunnel establishment confirmation message to the master node.

62. The method according to any one of claims 54 to 60, further comprising:
receiving a second GTP tunnel activation request transmitted by the master node; and
transmitting a second GTP tunnel activation confirmation message to the master node.

63. The method according to claim 61 or 62, further comprising: transmitting data to the master node.

64. A terminal device, comprising:
a first receiving module configured to receive configuration information for changing a secondary node/primary secondary cell; and
a changing module configured to change the secondary node/primary secondary cell based on the configuration information for changing the secondary node/primary secondary cell,
wherein the configuration information for changing the secondary node/primary secondary cell comprises at least one of:
addition condition configuration information for a candidate secondary node/primary secondary cell;
configuration information for the candidate secondary node/primary secondary cell; and
release condition configuration information for a source secondary node/primary secondary cell.

65. The terminal device according to claim 64, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

66. The terminal device according to claim 64 or 65, wherein the configuration information for the candidate secondary node/primary secondary cell comprises at least one of:
configuration information for a primary secondary cell in the candidate secondary node;
configuration information for at least one secondary cell in the candidate secondary node; and
addition condition configuration information for at least one secondary cell in the candidate secondary node.

67. The terminal device according to claim 64 or 65, wherein the configuration information for the candidate secondary node/primary secondary cell comprises at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

68. The terminal device according to any one of claims 64 to 67, further comprising:
a first transmitting module configured to transmit a measurement result of the terminal device to a master node, the measurement result being used to generate the configuration information for changing the secondary node/primary secondary cell.

69. The terminal device according to any one of claims 64 to 68, wherein
when an original configuration before the changing is a Next-Generation Evolved Universal Radio Access (E-UTRA) and New Radio (NR) Dual Connectivity (NGEN-DC), E-UTRA and NR Dual Connectivity (EN-DC), or NR and E-UTRA Dual Connectivity (NE-DC), and a target configuration after the changing is NGEN-DC, EN-DC, or NE-DC, the addition condition configuration information for the candidate secondary node/primary secondary cell is based on Event B 1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B1.

70. The terminal device according to any one of claims 64 to 69, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

71. The terminal device according to any one of claims 64 to 69, wherein
when an original configuration before the changing is NGEN-DC, EN-DC, NE-DC, or NR-DC, the release condition configuration information for the source secondary node/primary secondary cell is determined based on a measurement result of a serving cell.

72. The terminal device according to any one of claims 64 to 69, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

73. The terminal device according to any one of claims 64 to 72, wherein the changing module is configured to:
initiate a random access procedure towards the candidate secondary node/primary secondary cell corresponding to the addition condition configuration information for the candidate secondary node/primary secondary cell when a current condition satisfies the addition condition configuration information for the candidate secondary node/primary secondary cell, and satisfies the release condition configuration information for the source secondary node/primary secondary cell;
initiate a random access procedure towards the candidate secondary node/primary secondary cell corresponding to the addition condition configuration information for the candidate secondary node/primary secondary cell when a current condition satisfies the addition condition configuration information for the candidate secondary node/primary secondary cell, and but does not satisfy the release condition configuration information for the source secondary node/primary secondary cell; or
determine whether to initiate a random access procedure towards the candidate secondary node/primary secondary cell corresponding to the addition condition configuration information for the candidate secondary node/primary secondary cell according to a predetermined processing scheme when a current condition satisfies the addition condition configuration information for the candidate secondary node/primary secondary cell, and but does not satisfy the release condition configuration information for the source secondary node/primary secondary cell.

74. The terminal device according to any one of claims 64 to 73, wherein the configuration information for changing the secondary node/primary secondary cell further comprises at least one of:
a secondary cell group counter; and
an identity of at least one candidate secondary node/primary secondary cell.

75. A network device, comprising:
a second transmitting module configured to transmit configuration information for changing a secondary node/primary secondary cell to a terminal device, wherein the configuration information for changing the secondary node/primary secondary cell comprises at least one of:
addition condition configuration information for a candidate secondary node/primary secondary cell;
configuration information for the candidate secondary node/primary secondary cell; and
release condition configuration information for a source secondary node/primary secondary cell.

76. The network device according to claim 75, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

77. The network device according to claim 75 or 76, wherein the configuration information for the candidate secondary node/primary secondary cell comprises at least one of:
configuration information for a primary secondary cell in the candidate secondary node;
configuration information for at least one secondary cell in the candidate secondary node; and
addition condition configuration information for at least one secondary cell in the candidate secondary node.

78. The network device according to claim 75 or 76, wherein the configuration information for the candidate secondary node/primary secondary cell comprises at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

79. The network device according to any one of claims 75 to 78, wherein the configuration information for changing the secondary node/primary secondary cell further comprises at least one of:
a secondary cell group counter; and
an identity of at least one candidate secondary node/primary secondary cell.

80. The network device according to any one of claims 75 to 79, further comprising:
a second receiving module configured to receive a measurement result of the terminal device, the measurement result being used to generate the configuration information for changing the secondary node/primary secondary cell.

81. The network device according to any one of claims 75 to 80, wherein the network device is further configured to:
determine at least one candidate secondary node/primary secondary cell and generate the addition condition configuration information for the candidate secondary node/primary secondary cell and/or the release conditional configuration information for the source secondary node/primary secondary cell, based on a measurement result of the terminal device; and
transmit, to the at least one candidate secondary node/primary secondary cell, at least one of:
the addition condition configuration information for the candidate secondary node/primary secondary cell;
the measurement result of terminal device;
a condition addition indication for the candidate secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
configuration information for at least one secondary cell in the secondary node.

82. The network device according to claim 81, wherein the network device is further configured to receive the configuration information for the candidate secondary node/primary secondary cell transmitted by the at least one candidate secondary node/primary secondary cell.

83. The network device according to claim 81 or 82, wherein the network device is further configured to transmit, to the source secondary node/primary secondary cell, at least one of:
the release condition configuration information for the source secondary node/primary secondary cell;
the measurement result of the terminal device; and
a condition release indication for the source secondary node/primary secondary cell.

84. The network device according to any one of claims 75 to 80, wherein the network device is further configured to:
determine at least one candidate secondary node/primary secondary cell based on a measurement result of the terminal device; and
transmit, to the at least one candidate secondary node/primary secondary cell, at least one of:
the measurement result of the terminal device; and
configuration information indication that notifies the candidate secondary node/primary secondary cell to generate the addition condition configuration information for the candidate secondary node/primary secondary cell and/or the configuration information for the candidate secondary node/primary secondary cell based on the measurement result of the terminal device.

85. The network device according to claim 84, wherein the network device is further configured to: receive the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell comprising at least one of:
the addition condition configuration information for the candidate secondary node/primary secondary cell;
configuration information for a primary secondary cell in the candidate secondary node;
configuration information for at least one secondary cell in the candidate secondary node; and
addition condition configuration information for at least one secondary cell in the candidate secondary node.

86. The network device according to claim 84, wherein the network device is further configured to: receive the addition condition configuration information for the candidate secondary node/primary secondary cell and/or the configuration information for the candidate secondary node/primary secondary cell transmitted by the at least one candidate secondary node/primary secondary cell, the information transmitted by the candidate secondary node/primary secondary cell comprising at least one of:
the addition condition configuration information for the candidate secondary node/primary secondary cell;
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

87. The network device according to any one of claims 81 to 86, wherein the network device is further configured to transmit the key of the candidate secondary node/primary secondary cell to the at least one candidate secondary node/primary secondary cell.

88. The network device according to any one of claims 84 to 87, wherein the network device is further configured to transmit, to the source secondary node/primary secondary cell, at least one of:
the measurement result of the terminal device; and
a condition release indication for the source secondary node/primary secondary cell.

89. The network device according to claim 88, wherein the network device is further configured to receive the release condition configuration information for the source secondary node/primary secondary cell transmitted by the source secondary node/primary secondary cell.

90. The network device according to any one of claims 75 to 80, wherein the network device is further configured to transmit, to the source secondary node/primary secondary cell, at least one of:
a measurement result of the terminal device; and
a condition change indication for the secondary node/primary secondary cell.

91. The network device according to claim 90, wherein the network device is further configured to: receive at least one of the following transmitted by the source secondary node/primary secondary cell:
the configuration information for changing the secondary node/primary secondary cell; and
identity information of the candidate secondary node/primary secondary cell.

92. The network device according to claim 90 or 91, wherein the network device is further configured to transmit, to each candidate secondary node/primary secondary cell, at least one of:
the measurement result of the terminal device;
the addition condition configuration information for the candidate secondary node/primary secondary cell;
an identity of at least one candidate secondary node/primary secondary cell; and
a key of the candidate secondary node/primary secondary cell.

93. The network device according to claim 92, wherein the network device is further configured to: receive at least one of the following transmitted by each candidate secondary node/primary secondary cell:
configuration information for a primary secondary cell in the candidate secondary node;
configuration information for at least one secondary cell in the candidate secondary node; and
addition condition configuration information for at least one secondary cell in the candidate secondary node.

94. The network device according to claim 93, wherein the network device is further configured to: receive at least one of the following transmitted by each candidate secondary node/primary secondary cell:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

95. The network device according to claim 93 or 94, wherein the network device is further configured to: receive at least one of the following transmitted by each candidate secondary node/primary secondary cell:
a secondary cell group counter; and
an identity of at least one candidate secondary node/primary secondary cell.

96. The network device according to any one of claims 75 to 85, wherein
when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B1.

97. The network device according to any one of claims 75 to 85, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

98. The network device according to any one of claims 75 to 85, wherein
when an original configuration before the changing is NGEN-DC, EN-DC, NE-DC, or NR-DC, the release condition configuration information for the source secondary node/primary secondary cell is determined based on a measurement result of a serving cell.

99. The network device according to any one of claims 75 to 85, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

100. The network device according to any one of claims 75 to 99, wherein the network device is further configured to:
receive a first GRPS Tunneling Protocol (GTP) tunnel establishment request transmitted by the candidate secondary node, the first GTP tunnel establishment request containing a GTP tunnel identifier allocated by the candidate secondary node for the master node and an Access and Mobility Management Function (AMF)/User Plane Function (UPF);
transmit a second GTP tunnel establishment request to the source secondary node, the second GTP tunnel establishment request containing a GTP tunnel identifier allocated by the master node for the source secondary node;
receive a second GTP tunnel establishment confirmation message transmitted by the source secondary node;
transmit a third GTP tunnel establishment request to the AMF/LTPF, the third GTP tunnel establishment request containing a GTP tunnel identifier allocated by the candidate secondary node for the AMF/UPF;
receive a third GTP tunnel establishment confirmation message transmitted by the AMF/LTPF, the third GTP tunnel establishment confirmation message containing a GTP tunnel identifier allocated by the AMF/UPF for the candidate secondary node;
transmit a first GTP tunnel establishment confirmation message to the candidate secondary node, the first GTP tunnel establishment confirmation message containing the GTP tunnel identifier allocated by the AMF/UPF for the candidate secondary node and the GTP tunnel identifier allocated by the master node for the candidate secondary node.

101. The network device according to any one of claims 75 to 99, wherein the network device is further configured to:
receive a first GTP tunnel activation request transmitted by the candidate secondary node;
transmit a second GTP tunnel activation request to the source secondary node;
receive a second GTP tunnel activation confirmation message transmitted by the source secondary node;
transmit a third GTP tunnel activation request to the AMF/UPF;
receive the third GTP tunnel activation confirmation message transmitted by the AMF/UPF; and
transmit a first GTP tunnel activation confirmation message to the candidate secondary node.

102. The network device according to claim 100 or 101, wherein the network device is further configured to:
receive, by the master node, data transmitted by the source secondary node; and
forward, by the master node, the data to the candidate secondary node.

103. A network device, comprising:
a third transmitting module configured to transmit configuration information for changing a secondary node/primary secondary cell to a master node, wherein the configuration information for changing the secondary node/primary secondary cell comprises at least one of:
addition condition configuration information for the candidate secondary node/primary secondary cell; and
configuration information for the candidate secondary node/primary secondary cell.

104. The network device according to claim 103, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

105. The network device according to claim 103 or 104, wherein the configuration information for the candidate secondary node/primary secondary cell comprises at least one of:
configuration information for a primary secondary cell in the candidate secondary node;
configuration information for at least one secondary cell in the candidate secondary node; and
addition condition configuration information for at least one secondary cell in the candidate secondary node.

106. The network device according to claim 103 or 104, wherein the configuration information for the candidate secondary node/primary secondary cell comprises at least one of:
configuration information for at least one primary secondary cell in the candidate secondary node and corresponding primary secondary cell condition configuration information;
configuration information for a default primary secondary cell in the candidate secondary node;
configuration information for at least one secondary cell in the candidate secondary node; and
addition condition configuration information for at least one secondary cell in the candidate secondary node.

107. The network device according to any one of claims 103 to 106, wherein the network device is further configured to:
receive information transmitted by the master node, and determining the configuration information for the candidate secondary node/primary secondary cell based on the information transmitted by the master node, the information transmitted by the master node comprising at least one of:
the addition condition configuration information for the candidate secondary node/primary secondary cell;
a measurement result of terminal device;
a condition addition indication for the secondary node/primary secondary cell that notifies the candidate secondary node/primary secondary cell to generate the configuration information for the candidate secondary node/primary secondary cell based on the measurement result of the terminal device;
an identity of at least one candidate secondary node/primary secondary cell;
a key of the candidate secondary node/primary secondary cell; and
information on at least one secondary cell in the candidate secondary node.

108. The network device according to any one of claims 103 to 107, wherein the network device is further configured to:
receive information transmitted by the master node, and determining the configuration information for changing the secondary node/primary secondary cell based on the information transmitted by the master node, the information transmitted by the master node comprising at least one of:
a measurement result of terminal device; and
configuration information indication that notifies the candidate secondary node to generate the configuration information for changing the secondary node/primary secondary cell based on the measurement result of the terminal device.

109. The network device according to claim 108, wherein the information transmitted by the master node further comprises at least one of:
a key of the candidate secondary node/primary secondary cell; and
an identity of at least one candidate secondary node/primary secondary cell.

110. The network device according to any one of claims 103 to 109, wherein
when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B 1.

111. The network device according to any one of claims 103 to 109, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

112. The network device according to any one of claims 103 to 109, wherein
when an original configuration before the changing is NGEN-DC, EN-DC, NE-DC, or NR-DC, the release condition configuration information for the source secondary node/primary secondary cell is determined based on a measurement result of a serving cell.

113. The network device according to any one of claims 103 to 109, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

114. The network device according to any one of claims 103 to 113, wherein the network device is further configured to:
transmit a first GTP tunnel establishment request to a master node, the first GTP tunnel establishment request containing a GTP tunnel identifier allocated by the candidate secondary node for the master node and an AMF/UPF; and
receive a first GTP tunnel establishment confirmation message transmitted by the master node, the first GTP tunnel establishment confirmation message containing a GTP tunnel identifier allocated by the AMF/UPF for the candidate secondary node and a GTP tunnel identifier allocated by the master node for the candidate secondary node.

115. The network device according to any one of claims 103 to 113, wherein the network device is further configured to:
transmit a first GTP tunnel activation request to the master node; and
receive a first GTP tunnel activation confirmation message transmitted by the master node.

116. The network device according to claim 114 or 115, wherein the network device is further configured to:
receive data forwarded by the master node; and/or
receive data forwarded by the AMF/UPF.

117. A network device comprising:
a fourth transmitting module configured to transmit configuration information for changing a secondary node/primary secondary cell to a master node, wherein the configuration information for changing the secondary node/primary secondary cell comprises at least one of:
addition condition configuration information for a candidate secondary node/primary secondary cell; and
release condition configuration information for the source secondary node/primary secondary cell.

118. The network device according to claim 117, wherein the addition condition configuration information for the candidate secondary node/primary secondary cell comprises:
addition condition configuration information configured for each individual candidate secondary node/primary secondary cell; and/or
same addition condition configuration information configured for all candidate secondary nodes/primary secondary cells.

119. The network device according to claim 117 or 118, wherein the network device is further configured to:
receive information transmitted by the master node, and determine the configuration information for changing the secondary node/primary secondary cell based on the information transmitted by the master node, the information transmitted by the master node comprising at least one of:
a measurement result of a terminal device;
a condition release indication of the source secondary node/primary secondary cell; and
a condition change indication for the secondary node/primary secondary cell.

120. The network device according to any one of claims 117 to 119, wherein
when an original configuration before the changing is NGEN-DC, EN-DC, or NE-DC, and a target configuration after the changing is NGEN-DC, EN-DC, or NE-DC, the addition condition configuration information for the candidate secondary node/primary secondary cell is based on Event B1;
when the original configuration before the changing is NE-DC, and the target configuration after the changing is NR-DC, the addition condition configuration information for the candidate secondary node/primary secondary cell is based on Event A4;
when the original configuration before the changing is NR-DC, and the target configuration after the changing is NR-DC, the addition condition configuration information for the candidate secondary node/primary secondary cell is based on Event A4; and
when the original configuration before the changing is NR-DC, and the target configuration after the changing is NE-DC, the addition condition configuration information for the candidate secondary node/primary secondary cell is based on Event B1.

121. The network device according to any one of claims 117 to 119, wherein
when the addition condition configuration information for the candidate secondary node/primary secondary cell is configured by the candidate secondary node/primary secondary cell, the addition condition configuration information for the candidate secondary node/primary secondary cell is based on Events A3 and B5.

122. The network device according to any one of claims 117 to 119, wherein
when an original configuration before the changing is NGEN-DC, EN-DC, NE-DC, or NR-DC, the release condition configuration information for the source secondary node/primary secondary cell is determined based on a measurement result of a serving cell.

123. The network device according to any one of claims 117 to 119, wherein
when an original configuration before the changing is NGEN-DC, EN-DC, or NE-DC, and a target configuration after the changing is NGEN-DC, EN-DC, or NE-DC, the configuration information for changing the secondary node/primary secondary cell is based on Event A2 and Event A4, or based on Event A4, or based on Event A3, or based on Event A5, or based on Event A3 and Event A5;
when the original configuration before the changing is NE-DC, and the target configuration after the changing is NR-DC, the configuration information for changing the secondary node/primary secondary cell is based on Event B1;
when the original configuration before the changing is NR-DC, and the target configuration after the changing is NR-DC, the configuration information for changing the secondary node/primary secondary cell is based on Event A2 and Event A4, or based on Event A4, or based on Event A3, or based on Event A5, or based on Event A3 and Event A5; and
when the original configuration before the changing is NR-DC, and the target configuration after the changing is NE-DC, the configuration information for changing the secondary node/primary secondary cell is based on Event B1.

124. The network device according to any one of claims 117 to 123, wherein the network device is further configured to:
receive a second GTP tunnel establishment request transmitted by the master node, the second GTP tunnel establishment request containing a GTP tunnel identifier allocated by the master node for the source secondary node; and
transmit a second GTP tunnel establishment confirmation message to the master node.

125. The network device according to any one of claims 117 to 123, wherein the network device is further configured to:
receive a second GTP tunnel activation request transmitted by the master node; and
transmit a second GTP tunnel activation confirmation message to the master node.

126. The network device according to claim 124 or 125, wherein the network device is further configured to: transmit data to the master node.

127. A terminal device, comprising a processor and a memory, wherein the memory is configured to store a computer program, and the processor is configured to invoke and execute the computer program stored in the memory to perform the method according to any one of claims 1 to 11.

128. A network device, comprising a processor and a memory, wherein the memory is configured to store a computer program, and the processor is configured to invoke and execute the computer program stored in the memory to perform the method according to any one of claims 12 to 63.

129. A chip, comprising a processor configured to invoke and execute a computer program from a memory, to enable a device provided with the chip to perform the method according to any one of claims 1 to 11.

130. A chip, comprising a processor configured to invoke and execute a computer program from a memory, to enable a device provided with the chip to perform the method according to any one of claims 12 to 63.

131. A computer-readable storage medium, configured to store a computer program that enables a computer to perform the method according to any one of claims 1 to 11.

132. A computer-readable storage medium, configured to store a computer program that enables a computer to perform the method according to any one of claims 12 to 63.

133. A computer program product, comprising computer program instructions that cause a computer to perform the method according to any one of claims 1 to 11.

134. A computer program product, comprising computer program instructions that cause a computer to perform the method according to any one of claims 12 to 63.

135. A computer program, causing a computer to perform the method according to any one of claims 1 to 11.

136. A computer program, causing a computer to perform the method according to any one of claims 12 to 63.
